# EUROPÄISCHE PATENTSCHRIFT

(11) **EP 2 957 810 B1**
(45) Veröffentlichungstag und Bekanntmachung des Hinweises auf die Patenterteilung: **13.09.2017**
(21) Anmeldenummer: 15171274.2
(22) Anmeldetag: 09.06.2015
(51) Int. Cl.: F16L 37/23, F16L 37/32, F16K 15/06

(54) **KUPPLUNGSTEIL FÜR EINE SCHNELLKUPPLUNG FÜR HOCHDRUCKHYDRAULIKLEITUNGEN**
COUPLING PART FOR A QUICK CONNECTOR FOR HIGH PRESSURE HYDRAULIC PIPES
PIÈCE DE RACCORD POUR UN RACCORD RAPIDE POUR DES CONDUITES HYDRAULIQUES À HAUTE PRESSION

(30) Priorität: 18.06.2014 DE 102014009046
(43) Veröffentlichungstag der Anmeldung: 23.12.2015
(73) Patentinhaber: U.M. Gewerbeimmobilien GmbH & Co. KG, 58791 Werdohl (DE)
(72) Erfinder: Weiland, Fritz Georg, 58540 Meinerzhagen (DE); Hartmann, Jürgen, 58339 Breckerfeld (DE)
(74) Vertreter: Patent- und Rechtsanwälte Dr. Solf & Zapf

(56) Entgegenhaltungen:
- EP-A1- 1 840 442
- EP-A1- 2 505 899
- US-A- 4 200 121
- US-A1- 2009 091 129

## Beschreibung

Die vorliegende Erfindung betrifft ein Kupplungsteil, insbesondere eine Kupplungsmuffe, für eine Schnellkupplung für Hochdruckhydraulikleitungen sowie eine Schnellkupplung mit einem derartigen Kupplungsteil.

Derartige Schnellkupplungen gewährleisten ein schnelles Verbinden und Trennen von zwei Hydraulikleitungen. Sie sind beispielsweise als Steckkupplungen ausgebildet und weisen zwei zusammensteckbare Kupplungsteile, nämlich einen Kupplungsstecker und eine Kupplungsmuffe, auf. Der Kupplungsstecker ist in eine Aufnahmeöffnung der Kupplungsmuffe einsteckbar und mit dieser lösbar verriegelbar. Jedes Kupplungsteil weist zudem ein Kupplungsgehäuse auf, innerhalb welchem ein federbelastetes Ventil angeordnet ist. Im ungekuppelten Zustand sind die Ventile derart angeordnet, dass sie das jeweilige Kupplungsteil verschließen. Beim Zusammenstecken der beiden Kupplungsteile öffnen sich die Ventile gegenseitig selbsttätig und beim Auskuppeln verschließen die Ventile selbsttätig.

Eine derartige Schnellkupplung ist beispielsweise aus der DE 27 12 114 C2 bekannt. Weitere Schnellkupplungen sind aus der DE 30 15 485 C2, der EP 2 505 899 A1, der US 2009/091129 A1 und der EP 1 840 442 A1 bekannt. Aufgabe der vorliegenden Erfindung ist die Bereitstellung eines kostengünstig herstellbaren Kupplungsteils für eine Schnellkupplung, insbesondere eine Steckkupplung, für Hydraulik-Hochdruckleitungen, das für eine sehr hohe Durchflussmenge geeignet ist.

Weitere Aufgabe ist die Bereitstellung einer Schnellkupplung mit mindestens einem derartigen Kupplungsteil.

Diese Aufgaben werden durch ein Kupplungsteil gemäß Anspruch 1 und eine Schnellkupplung gemäß Anspruch 13 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Einen Längsschnitt durch die erfindungsgemäße Kupplungsmuffe mit einem Schließventil in geschlossener Stellung mit einer zweiteiligen Lagerhülse und einer Kammerungshülse gemäß dem Stand der Technik
- Figur 2:: Einen Längsschnitt durch eine Ventilsitzhülse der Kupplungsmuffe mit dem Schließventil in geschlossener Stellung mit einer einteiligen Lagerhülse
- Figur 3:: Eine vergrößerte Darstellung des Bereiches des Ventilsitzes aus Figur 3
- Figur 4:: Einen Längsschnitt durch die Ventilsitzhülse mit dem Schließventil in maximal geöffneter Stellung
- Figur 5:: Eine vergrößerte Darstellung des Bereiches des Ventilsitzes aus Figur 4
- Figur 6:: Eine Seitenansicht des Schließventils mit einem Ventildichtring, einer Kammerungshülse gemäß dem Stand der Technik und einer Schiebehülse

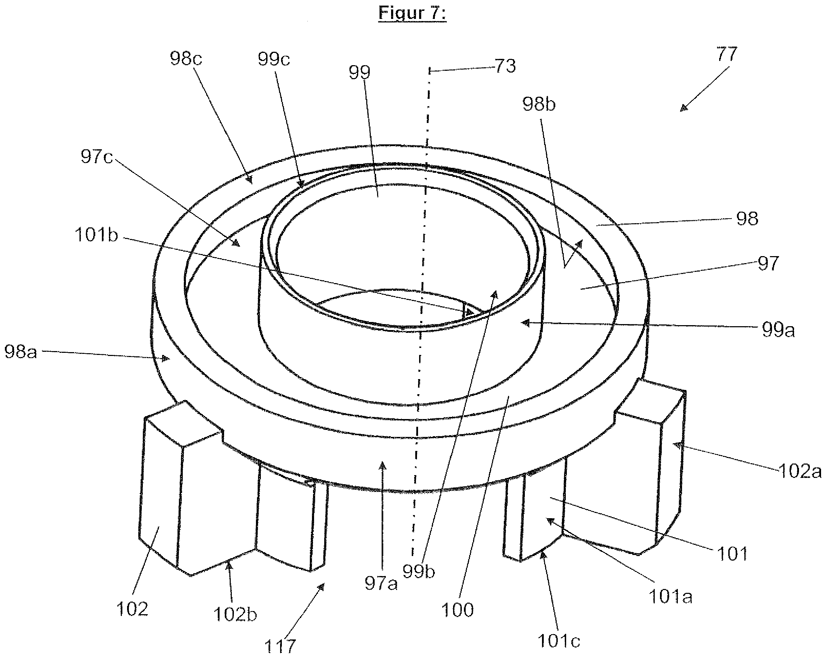

- Figur 7:: Eine perspektivische Ansicht einer Kammerungs- und Führungshülse
- Figur 8:: Eine Seitenansicht einer Lagerhülse
- Figur 9:: Eine perspektivische Ansicht der Lagerhülse mit einer Federklammer

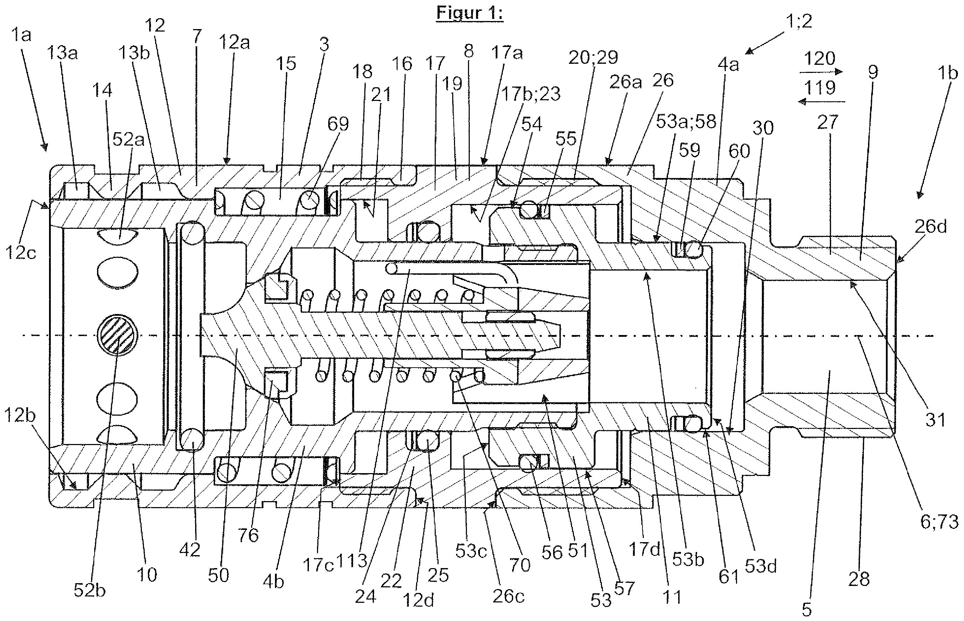

Bei dem erfindungsgemäßen Kupplungsteil 1 (Fig. 1) einer Schnellkupplung, insbesondere Steckkupplung, für Hochdruckhydraulikleitungen handelt es sich vorzugsweise um eine Kupplungsmuffe 2. Die Kupplungsmuffe 2 weist ein Kupplungsgehäuse 3 mit einem hülsenartigen Gehäuseaußenteil 4a und einem hülsenartigen Gehäuseinnenteil 4b sowie eine Kupplungsachse 6 auf. Das Kupplungsteil 1, insbesondere die Kupplungsmuffe 2, weist zudem ein Kupplungsende 1a und ein Anschluss- bzw. Leitungsende 1b auf, wobei sich die beiden Enden 1a;1b in Richtung der Kupplungsachse 6 gegenüberliegen. Am Kupplungsende 1a wird das Kupplungsteil 1 mit einem korrespondierenden Gegenkupplungsteil (nicht dargestellt) der Schnellkupplung zusammengesteckt. Im Falle der Kupplungsmuffe 2 handelt es sich bei dem Gegenkupplungsteil um einen Kupplungsstecker. Am Anschlussende 1b ist das Kupplungsteil 1, insbesondere die Kupplungsmuffe 2, mit der Hydraulikleitung verbunden.

Die im Folgenden verwendeten Begriffe "axial", "radial" und "in Umfangsrichtung" beziehen sich, soweit nichts Gegenteiliges erwähnt wird, immer auf die Kupplungsachse 6 bzw. eine dazu koaxiale Ventillängsachse 73. Die Bezeichnung "kreiszylindrisch" bezieht sich ebenfalls auf die Kupplungsachse 6 bzw. die Ventillängsachse 73 als Mittelachse bzw. Rotationsachse.

Das Kupplungsgehäuse 3 weist einen vom Kupplungsende 1a bis zum Anschlussende 1b durchgehenden Durchflusskanal bzw. Strömungskanal 5 für das Hydraulikmedium auf. Der Durchflusskanal 5 erstreckt sich also in Richtung der Kupplungsachse 6 durch das Kupplungsgehäuse 3 durch.

Das Gehäuseaußenteil 4a weist in Richtung der Kupplungsachse 6 vom Kupplungsende 1a zum Anschlussende 1b hin gesehen eine Sperr- bzw. Verriegelungs- bzw. Rasthülse 7, eine Verbindungshülse 8 sowie eine Anschlusshülse bzw. ein Anschlussteil 9 auf. Das Gehäuseinnenteil 4b ist vorzugsweise zweiteilig ausgebildet und weist in Richtung der Kupplungsachse 6 vom Kupplungsende 1a zum Anschlussende 1b hin gesehen eine Ventilsitzhülse 10 und eine Drucklagerhülse 11 auf.

Die Sperrhülse 7 (Fig. 1) besteht vorzugsweise aus Metall, insbesondere aus Automatenstahl oder Nitrierstahl. Die Sperrhülse 7 weist eine Sperrhülsenwandung 12 mit einer Wandungsaußenfläche 12a und einer Wandungsinnenfläche 12b sowie einer ersten Sperrhülsenstirnfläche 12c und einer zweiten Sperrhülsenstirnfläche 12d auf. Die Innenkontur der Sperrhülsenwandung 12 weist in Richtung der Kupplungsachse 6 vom Kupplungsende 1a zum Anschlussende 1b hin gesehen zunächst eine erste, ringförmige Kugelaufnahmenut 13a, einen radial nach innen vorspringenden Kugelsperrring 14, eine zweite ringförmige Kugelaufnahmenut 13b, eine umlaufende, radial nach außen rückspringende, Federaufnahmenut 15 sowie ein Innengewinde 16 auf. Beidseits des Kugelsperrringes 14 ist somit eine Kugelaufnahmenut 13a;b vorhanden.

Die Verbindungshülse 8 (Fig. 1) besteht vorzugsweise aus Metall, insbesondere aus Automatenstahl. Die Verbindungshülse 8 weist eine Verbindungshülsenwandung 17 mit einer Wandungsaußenfläche 17a und einer Wandungsinnenfläche 17b sowie einer ersten Verbindungshülsenstirnfläche 17c und einer zweiten Verbindungshülsenstirnfläche 17d auf. Die Außenkontur der Verbindungshülsenwandung 17 weist in Richtung der Kupplungsachse 6 vom Kupplungsende 1a zum Anschlussende 1b hin gesehen ein erstes Außengewinde 18, einen radial in Bezug zum Außengewinde 18 nach außen vorspringenden Ring 19 und ein radial in Bezug zum Ring 19 nach innen zurückspringendes, zweites Außengewinde 20 auf. Die Innenkontur der Verbindungshülsenwandung 17 weist in Richtung der Kupplungsachse 6 vom Kupplungsende 1a zum Anschlussende 1b hin gesehen einen ersten kreiszylindrischen Flächenabschnitt 21, einen in Bezug zum ersten kreiszylindrischen Flächenabschnitt 21 radial nach innen vorspringenden Lagerring 22 sowie einen zweiten, in Bezug zum Lagerring 22 radial nach außen rückspringenden kreiszylindrischen Flächenabschnitt 23 auf. Der Lagerring 22 weist eine kreiszylindrische Ringfläche 22a und eine Ringnut 24 zur Aufnahme eines Dichtrings 25 auf.

Die Anschlusshülse 9 (Fig. 1) besteht vorzugsweise aus Metall, insbesondere aus Automatenstahl. Die Anschlusshülse 9 weist eine Anschlusshülsenwandung 26 mit einer Wandungsaußenfläche 26a und einer Wandungsinnenfläche 26b sowie einer ersten Anschlusshülsenstirnfläche 26c und einer zweiten Anschlusshülsenstirnfläche 26d auf. Die Außenkontur der Anschlusshülsenwandung 26 verjüngt sich in Richtung der Kupplungsachse 6 vom Kupplungsende 1a zum Anschlussende 1b hin gesehen stufenartig. Am Anschlussende 1b weist die Anschlusshülse 9 zudem einen Anschlussstutzen 27 mit einem Außengewinde 28 zum Anschluss einer Hydraulikleitung auf. Die Anschlusshülse 9 kann auch mit jeder anderen gewünschten Anschlussform gestaltet werden. Auch die Innenkontur der Anschlusshülsenwandung 26 verjüngt sich in Richtung der Kupplungsachse 6 vom Kupplungsende 1a zum Anschlussende 1b hin gesehen stufenartig. Die Innenkontur weist in Richtung der Kupplungsachse 6 vom Kupplungsende 1a zum Anschlussende 1b hin gesehen ein Innengewinde 29, einen radial in Bezug zum Innengewinde 29 nach innen vorspringenden ersten kreiszylindrischen Flächenabschnitt 30 und einen in Bezug zum ersten kreiszylindrischen Flächenabschnitt 30 nach innen vorspringenden zweiten kreiszylindrischen Flächenabschnitt 31 auf. Der zweite kreiszylindrische Flächenabschnitt 31 ist Teil des Anschlussstutzens 27.

Im zusammengebauten Zustand des Gehäuseaußenteils 4a ist die Sperrhülse 7 mit ihrem Innengewinde 16 soweit auf das erste Außengewinde 18 der Verbindungshülse 8 aufgeschraubt, dass die zweite Sperrhülsenstirnfläche 12d an dem Ring 19 anliegt. Die Anschlusshülse 9 ist mit ihrem Innengewinde 29 soweit auf das zweite Außengewinde 20 der Verbindungshülse 8 aufgeschraubt, dass die erste Anschlusshülsenstirnfläche 26c von der anderen Seite an dem Ring 19 anliegt. Die Sperrhülse 7, die Verbindungshülse 8 und die Anschlusshülse 9 sind somit fest aber lösbar miteinander verbunden, insbesondere verschraubt und bilden das Gehäuseaußenteil 4a.

Wie bereits erläutert, besteht das Gehäuseinnenteil 4b aus der Ventilsitzhülse 10 und der Drucklagerhülse 11.

Die Ventilsitzhülse 10 (Fig. 1-5) besteht vorzugsweise aus Metall, insbesondere aus hochfestem Automatenstahl. Die Ventilsitzhülse 10 weist eine Ventilsitzhülsenwandung 32 mit einer Wandungsaußenfläche 32a und einer Wandungsinnenfläche 32b sowie einer ersten Ventilsitzhülsenstirnfläche 32c und einer zweiten Ventilsitzhülsenstirnfläche 32d auf. Die Außenkontur der Ventilsitzhülsenwandung 32 weist in Richtung der Kupplungsachse 6 vom Kupplungsende 1a zum Anschlussende 1b hin gesehen einen ersten kreiszylindrischen Flächenabschnitt 33, einen zweiten, in Bezug zum ersten kreiszylindrischen Flächenabschnitt 33 radial nach innen rückspringenden kreiszylindrischen Flächenabschnitt 34 und ein Außengewinde 35 auf. Im Bereich des ersten kreiszylindrischen Flächenabschnitts 33 weist die Ventilsitzhülse 10 außerdem eine umlaufende Federaufnahmenut 36 auf. Die Länge der Federaufnahmenut 36 entspricht der Länge der Federaufnahmenut 15 der Sperrhülse 7.

Die Innenkontur der Ventilsitzhülsenwandung 32, welche einen Teil des Durchflusskanals 5 für das Hydraulikmedium bildet, weist in Richtung der Kupplungsachse 6 vom Kupplungsende 1a zum Anschlussende 1b hin bzw. von der ersten Ventilsitzhülsenstirnfläche 32c zur zweiten Ventilsitzhülsenstirnfläche 32d hin gesehen eine sich radial nach innen verjüngende Montagefase 37, einen ersten kreiszylindrischen Flächenabschnitt 38, einen konischen, sich vom Kupplungsende 1a zum Anschlussende 1b hin radial nach innen verjüngenden Flächenabschnitt 39 und einen zweiten kreiszylindrischen Flächenabschnitt 40 auf. Im Bereich des zweiten kreiszylindrischen Flächenabschnitts 40 weist die Ventilsitzhülse 10 zudem eine Ringnut 41 zur Aufnahme eines Dichtrings 42 auf. Der erste kreiszylindrische Flächenabschnitt 38, der sich verjüngende Flächenabschnitt 39 und der zweite kreiszylindrische Flächenabschnitt 40 bilden eine Aufnahmeöffnung zur Aufnahme des Kupplungssteckers der erfindungsgemäßen Schnellkupplung. Des Weiteren weist die Ventilsitzhülsenwandung 32 im Bereich des ersten kreiszylindrischen Flächenabschnitts 38 der Wandungsinnenfläche 32b mehrere durchgehende, in Umfangsrichtung zueinander benachbarte, zylindrische Bohrungen 52a auf, welche in an sich bekannter Weise zur Aufnahme von Sperrkugeln 52b dienen.

An den zweiten kreiszylindrischen Flächenabschnitt 40 schließt sich in Richtung der Kupplungsachse 6 vom Kupplungsende 1a zum Anschlussende 1b hin gesehen eine ringförmige, insbesondere kreiszylindrische, Durchflussfläche 43 an, die einen geringeren Durchmesser aufweist als der zweite kreiszylindrische Flächenabschnitt 40. Infolgedessen gehen der zweite kreiszylindrische Flächenabschnitt 40 und die Durchflussfläche 43 über eine ringscheibenförmige Steckeranschlagfläche 44 ineinander über, welche senkrecht zur Kupplungsachse 6 ist.

An die Durchflussfläche 43 schließt sich in Richtung der Kupplungsachse 6 vom Kupplungsende 1a zum Anschlussende 1b hin gesehen eine konische bzw. kegelförmige Ventilsitzfläche 45 an. Die Ventilsitzfläche 45 erweitert sich vom Kupplungsende 1a zum Anschlussende 1b hin gesehen und weist eine Steigung m_{VS} auf. Die Steigung m_{VS} berechnet sich aus dem Verhältnis des Betrages der radialen Länge zu dem Betrag der axialen Länge der Ventilsitzfläche 45.

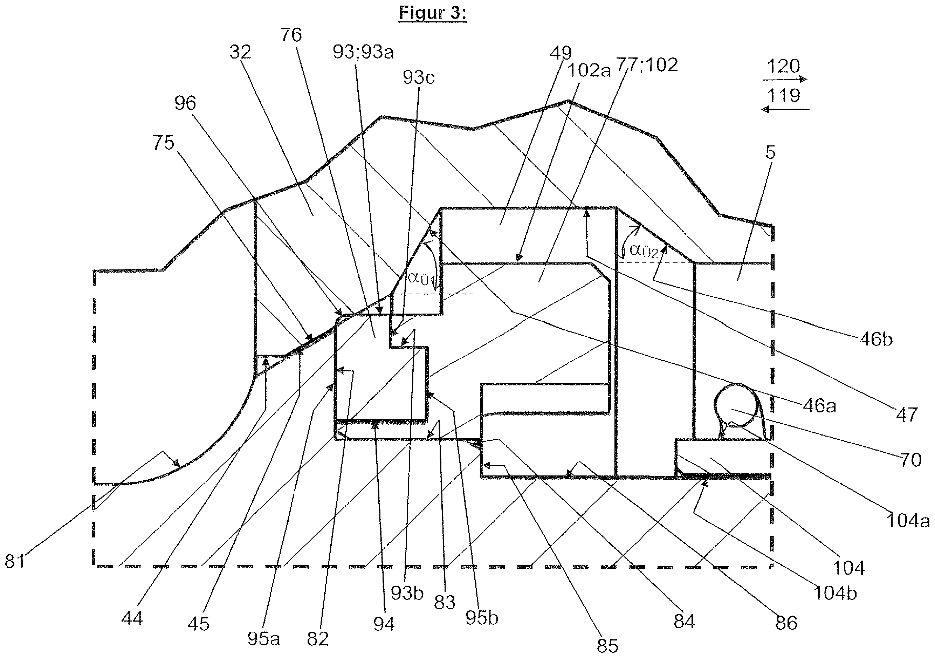

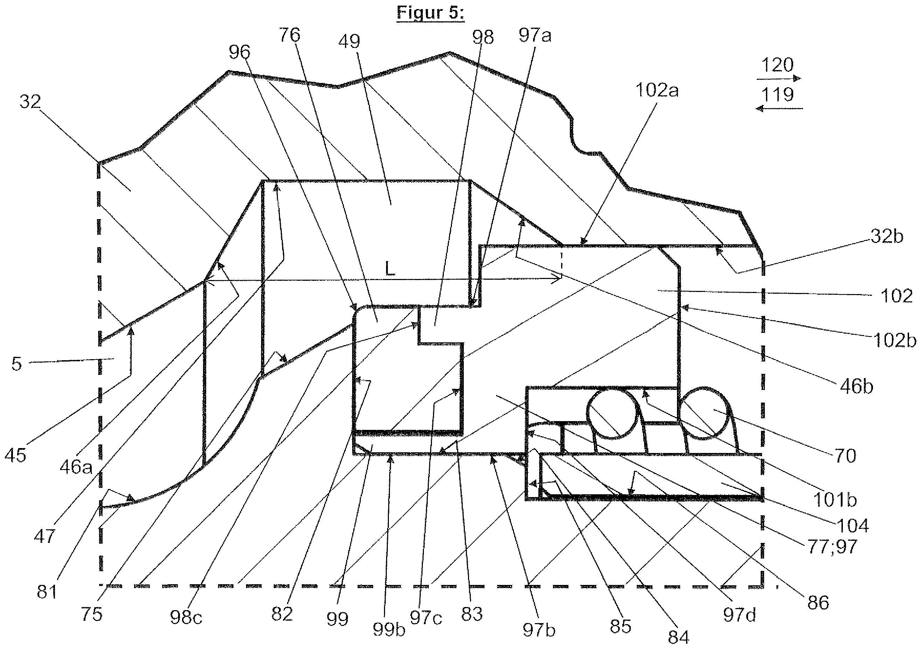

An die Ventilsitzfläche 45 schließt sich in Richtung der Kupplungsachse 6 vom Kupplungsende 1a zum Anschlussende 1b hin gesehen erfindungsgemäß eine erste konische bzw. kegelförmige Übergangsfläche 46a an. Die erste konische Übergangsfläche 46a erweitert sich vom Kupplungsende 1a zum Anschlussende 1b hin gesehen und weist eine Steigung m_{Ü1} auf. Die Steigung m_{Ü1} berechnet sich aus dem Verhältnis des Betrages der radialen Länge zu dem Betrag der axialen Länge der ersten Übergangsfläche 46a. Infolgedessen erweitert sich der Strömungsquerschnitt bzw. Durchflussquerschnitt der Ventilsitzhülse 10 direkt nach der Ventilsitzfläche 45. Dabei gilt vorzugsweise: m_{Ü1} > m_{VS}. Dadurch werden die Turbulenzen verringert. Der Winkel α_{Ü1} (Fig. 3), den die erste Übergangsfläche 46a mit der Kupplungsachse 6 einschließt, beträgt dabei vorzugsweise 50 bis 60 °. An die erste konische Übergangsfläche 46a schließt sich in Richtung der Kupplungsachse 6 vom Kupplungsende 1a zum Anschlussende 1b hin gesehen eine kreiszylindrische Auskofferungsfläche bzw. Strömungsfläche bzw. Erweiterungsfläche 47 an. An die Erweiterungsfläche 47 schließt sich in Richtung der Kupplungsachse 6 vom Kupplungsende 1a zum Anschlussende 1b hin gesehen eine zweite konische bzw. kegelförmige Übergangsfläche 46b an. Die zweite konische Übergangsfläche 46b verjüngt sich vom Kupplungsende 1a zum Anschlussende 1b hin gesehen und weist eine Steigung m_{Ü2} auf. Die Steigung m_{Ü2} berechnet sich aus dem Verhältnis der radialen Länge zu der axialen Länge der zweiten Übergangsfläche 46b. Dabei gilt vorzugsweise: m_{Ü1} > m_{Ü2}. Der Winkel α_{Ü2} (Fig. 3), den die Ventilsitzfläche 45 mit der Kupplungsachse 6 einschließt, beträgt dabei vorzugsweise 35 bis 45 °. Die Gesamtlänge L (Fig. 5), also die Erstreckung in axialer Richtung, der ersten Übergangsfläche 46a, der Erweiterungsfläche 47 und der zweiten Übergangsfläche 46b zusammen beträgt vorzugsweise mindestens 7 mm, insbesondere mindestens 8 mm.

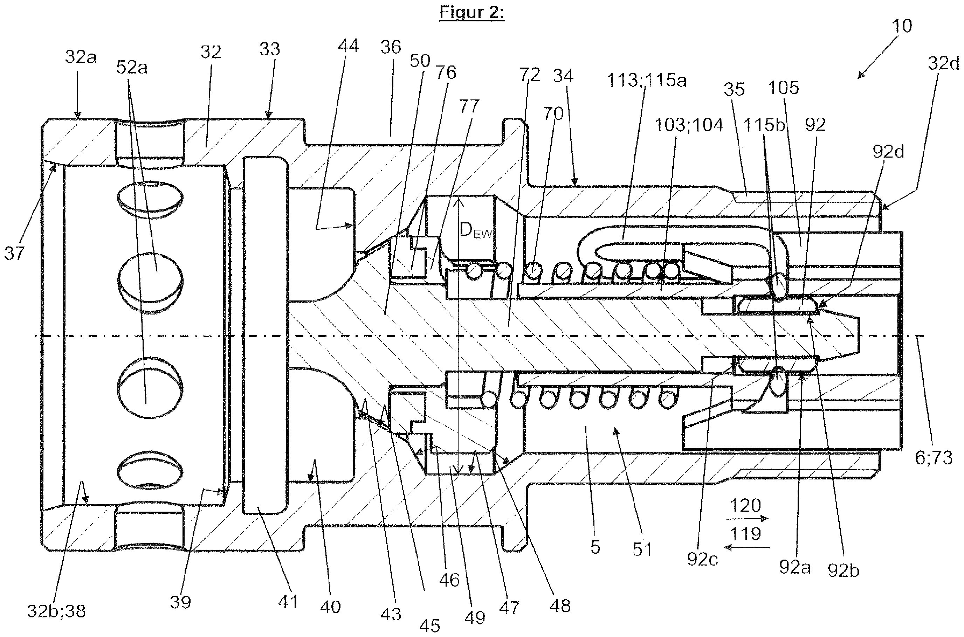

An die zweite Übergangsfläche 46b schließt sich in Richtung der Kupplungsachse 6 vom Kupplungsende 1a zum Anschlussende 1b hin gesehen eine kreiszylindrische Ventilführungsfläche 48 an. Die kreiszylindrische Ventilführungsfläche 48 dient zur Führung bzw. Gleitlagerung eines Schließventils 50 einer Ventileinrichtung 51, worauf weiter unten näher eingegangen wird. Der Durchmesser der Ventilführungsfläche 48 ist größer als der Durchmesser der Durchflussfläche 43 aber geringer als der Durchmesser der Erweiterungsfläche 47. Infolgedessen bilden die erste Übergangsfläche 46a, die Erweiterungsfläche 47 und die zweite Übergangsfläche 46b eine ringförmige bzw. umlaufende bzw. nutförmige Querschnittserweiterung 49 des Durchflussquerschnitts bzw. des Durchflusskanals 5. Das heißt der Querschnitt des Durchflusskanals 5 erweitert sich im Bereich der Querschnittserweiterung 49 radial nach außen. Die Querschnittserweiterung 49 weist dabei einen trapezförmigen Querschnitt auf. Die Erweiterungsfläche 47 der Querschnittserweiterung 49 weist zudem einen Erweiterungsdurchmesser D_{EW} (Fig. 2) auf.

Die Drucklagerhülse 11 (Fig. 1) besteht vorzugsweise aus Metall, insbesondere aus Automatenstahl. Die Drucklagerhülse 11 weist eine Drucklagerhülsenwandung 53 mit einer Wandungsaußenfläche 53a und einer Wandungsinnenfläche 53b sowie einer ersten Drucklagerhülsenstirnfläche 53c und einer zweiten Drucklagerhülsenstirnfläche 53d auf. Die Außenkontur der Drucklagerhülsenwandung 53 weist in Richtung der Kupplungsachse 6 vom Kupplungsende 1a zum Anschlussende 1b hin gesehen einen ersten kreiszylindrischen Flächenabschnitt 54, eine Ringnut 55 zur Aufnahme eines Dichtrings 56, einen zweiten kreiszylindrischen Flächenabschnitt 57, einen dritten kreiszylindrischen Flächenabschnitt 58, eine Ringnut 59 zur Aufnahme eines Dichtrings 60 und einen vierten kreiszylindrischen Flächenabschnitt 61 auf. Dabei ist der Durchmesser des zweiten kreiszylindrischen Flächenabschnitts 57 größer als der Durchmesser des dritten kreiszylindrischen Flächenabschnitts 58, so dass diese über eine Stufe ineinander übergehen.

Die Innenkontur der Drucklagerhülsenwandung 53 weist in Richtung der Kupplungsachse 6 vom Kupplungsende 1a zum Anschlussende 1b hin gesehen einen ersten kreiszylindrischen Flächenabschnitt 62, ein Innengewinde 63, einen zweiten kreiszylindrischen Flächenabschnitt 64, einen dritten kreiszylindrischen Flächenabschnitt 65 und einen vierten kreiszylindrischen Flächenabschnitt 66 auf. Dabei ist der Durchmesser des zweiten kreiszylindrischen Flächenabschnitts 64 größer als der Durchmesser des dritten kreiszylindrischen Flächenabschnitts 65 und der Durchmesser des dritten kreiszylindrischen Flächenabschnitts 65 größer als der Durchmesser des vierten kreiszylindrischen Flächenabschnitts 66, so dass die einzelnen Flächenabschnitte 64;65;66 jeweils über eine ringscheibenförmige Stufenfläche 67;68 ineinander übergehen.

Im zusammengebauten Zustand des Gehäuseinnenteils 4b (Fig. 1) ist die Drucklagerhülse 11 mit ihrem Innengewinde 63 soweit auf das Außengewinde 34 der Ventilsitzhülse 10 aufgeschraubt, dass die erste Stufenfläche 67 an der zweiten Ventilsitzhülsenstirnfläche 32b anliegt. Die Drucklagerhülse 11 und die Ventilsitzhülse 10 sind dadurch fest, aber lösbar miteinander verbunden und bilden das Gehäuseinnenteil 4b.

Wie bereits erläutert, ist im zusammengebauten Zustand der Kupplungsmuffe 2 (Fig. 1) das Gehäuseinnenteil 4b um einen begrenzten Betrag gegen die Kraft einer Verriegelungsfeder 69 in einer zur Kupplungsachse 6 parallelen Richtung hin- und her verschiebbar bzw. verschieblich gelagert. Das Gehäuseinnenteil 4b ist also im Gehäuseaußenteil 4a gleitgelagert. Dazu liegt die Ventilsitzhülse 10 mit ihrer Wandungsaußenfläche 32a an mehreren Bereichen an der Wandungsinnenfläche 12b;17b der Sperrhülse 7 und der Verbindungshülse 8 gleitbar an. Und die Drucklagerhülse 11 liegt mit ihrer Wandungsaußenfläche 32a an der Wandungsinnenfläche 17b;26b der Verbindungshülse 8 und der Anschlusshülse 9 gleitbar an. Zudem sind die beiden Federaufnahmenuten 15;36 der Sperrhülse 7 und der Ventilsitzhülse 10 in radialer Richtung benachbart angeordnet, wobei die Verriegelungsfeder 69 innerhalb der beiden Federaufnahmenuten 15;36 angeordnet ist und komprimiert ist. Dadurch kann das Gehäuseinnenteil 4b nur gegen die Kraft der Verriegelungsfeder 69 in eine zur Kupplungsachse 6 parallele Richtung verschoben werden. In der in Fig. 1 dargestellten ungekuppelten Ausgangsstellung ist zudem der Kugelsperrring 14 in radialer Richtung gegenüberliegend zu den die Sperrkugeln 52b enthaltenden Bohrungen 52a angeordnet. Dadurch ragen die Sperrkugeln 52b in den Durchflusskanal 5 hinein.

Wie bereits erläutert ist innerhalb des Gehäuseinnenteils 4b eine Ventileinrichtung 51 mit einem stößelartigen Schließventil bzw. Ventilstößel 50 (Fig. 1-6) zum Verschließen des Durchflusskanals 5 im ungekuppelten Zustand der Kupplungsmuffe 2 angeordnet. Die Ventileinrichtung 51 weist das Schließventil 50, eine Schließfeder 70 sowie Mittel zur axial verschieblichen Lagerung des Schließventils 50 und eine Verriegelungseinrichtung zur Verriegelung des Schließventils 50 in seiner maximal bzw. vollständig geöffneten Stellung auf.

Das Schließventil 50 weist einen Ventilkopf 71, einen länglichen Ventilschaft 72 sowie die Ventillängsachse 73 auf, welche koaxial zur Kupplungsachse 6 ist. In Richtung der Ventillängsachse 73 gesehen weist das Schließventil 50 ein erstes, kopfseitiges Ventilende 50a und ein zweites Ventilende 50b auf. Der insbesondere pilzartige Ventilkopf 71 weist eine in Richtung der Ventillängsachse 73 vorspringende Öffnungsnase 74 zum Öffnen des Schließventils 50 sowie eine Kegelfläche 75 und einen Ventildichtring 76 zur dichtenden Anlage an der konischen Ventilsitzfläche 45 der Ventilsitzhülse 10 auf. Des Weiteren weist der Ventilkopf 71 vorzugsweise eine Kammerungs- und Führungshülse 77 zur, insbesondere metallischen, Kammerung des Ventildichtrings 76 auf.

Dabei weist das Schließventil 50 insbesondere einen Ventilgrundkörper 78 auf, der vorzugsweise aus Metall, insbesondere aus Automatenstahl, besteht. Der Ventilgrundkörper 78 weist ein Kopfteil 79 sowie den sich an das Kopfteil 79 anschließenden Ventilschaft 72 auf. Das Kopfteil 79 bildet einen Teil des Ventilkopfes 71 und weist eine Kopfteilaußenfläche 79a auf.

Das Kopfteil 79 weist vom ersten Ventilende 50a zum zweiten Ventilende 50b hin gesehen zunächst die Öffnungsnase 74 und dann die Kegelfläche 75 auf. Die Öffnungsnase 74 weist eine, insbesondere ebenflächige und zur Ventillängsachse 73 senkrechte, Stoßfläche 80 und eine, insbesondere konkav gewölbte, sich zum zweiten Ventilende 50b hin erweiternde Nasenaußenwandung 81. Die Stoßfläche 80 und die Nasenaußenwandung 81 sind Teil der Kopfteilaußenfläche 79a. An die Nasenaußenwandung 81 schließt sich die sich zum zweiten Ventilende 50b hin erweiternde Kegelfläche 75 an. Weiter weist die Kopfteilaußenfläche 79a vom ersten Ventilende 50a zum zweiten Ventilende 50b hin gesehen eine ringscheibenförmige Dichtringanlagefläche 82, eine kreiszylindrische Lagerfläche 83, eine Montagefase 84 und eine ringscheibenförmige Bundfläche 85 auf. Die Kegelfläche 75 und die kreiszylindrische Lagerfläche 83 gehen über die Dichtringanlagefläche 82 ineinander über, wobei der Durchmesser der kreiszylindrischen Lagerfläche 83 geringer ist als der größte Durchmesser der Kegelfläche 75. Zudem ist die Dichtringanlagefläche 82 vorzugsweise senkrecht zur Ventillängsachse 73.

Der kreiszylindrische Ventilschaft 72 schließt sich an die Bundfläche 85 an, steht von dieser ab. Der Ventilschaft 72 weist eine Schaftaußenfläche 72a auf. Die Schaftaußenfläche 72a weist vom ersten Ventilende 50a zum zweiten Ventilende 50b hin gesehen eine kreiszylindrische Lagerhülsenführungsfläche 86, eine erste ringscheibenförmige Widerlagerfläche 87a, eine kreiszylindrische Schiebehülsenführungsfläche 88, eine zweite ringscheibenförmige Widerlagerfläche 87b sowie eine konische, sich zum zweiten Ventilende 50b hin verjüngende Schaftendfläche 89 und eine Schaftstirnfläche 90 auf.

Dabei ist der Durchmesser der Lagerhülsenführungsfläche 86 größer als der Durchmesser der Schiebehülsenführungsfläche 88. Und der größte Durchmesser der Schaftendfläche 89 ist ebenfalls größer als der Durchmesser der Schiebehülsenführungsfläche 88. Dadurch wird von der Schiebehülsenführungsfläche 88 und den beiden Widerlagerflächen 87a;b eine Schiebehülsenführungsnut 91 zur um einen begrenzten Betrag verschieblichen Führung einer Schiebehülse 92 gebildet.

Der Ventildichtring 76 besteht aus einem gummielastischen Material bzw. Kunststoff, insbesondere aus Nitril-Butadien-Kautschuk, PTFE (Polytetrafluorethylen) oder Polyurethan. Des Weiteren weist der Ventildichtring 76 eine umlaufende Ringaußenfläche 93, eine umlaufende, kreiszylindrische Ringinnenfläche 94 sowie zwei sich in einer zur Kupplungsachse 6 parallelen Richtung gegenüberliegende Ringstirnflächen 95a;b auf. Die beiden ebenflächigen Ringstirnflächen 95a;b sind senkrecht zur Ventillängsachse 73. Die Ringaußenfläche 93 ist zudem gestuft ausgebildet und weist eine erste und eine zweite, jeweils kreiszylindrische, Ringumfangsfläche 93a;93b auf. Der Durchmesser der ersten Ringumfangsfläche 93a ist dabei größer als der Durchmesser der zweiten Ringumfangsfläche 93b. Zudem ist die erste Ringumfangsfläche 93a dem ersten Ventilende 50a zugewandt und die zweite Ringumfangsfläche 93b dem zweiten Ventilende 50b zugewandt. Die erste und zweite Ringumfangsfläche 93a;b gehen über eine ringscheibenförmige Anlagefläche 93c der Ringaußenfläche 93 ineinander über, die senkrecht zur Kupplungsachse 6 ist. Zudem gehen die erste Ringumfangsfläche 93a und die erste Ringstirnfläche 95a über eine umlaufende, insbesondere abgerundete, Ringdichtkante 96 ineinander über, welche zur Anlage an der Ventilsitzfläche 45 dient.

Die Kammerungs- und Führungshülse 77 besteht vorzugsweise aus Metall, insbesondere aus Stahl oder Kunststoff. Die Kammerungs- und Führungshülse 77 ist vorzugsweise einstückig oder in Hybridbauweise ausgebildet und weist eine Ringscheibe 97 mit einer umlaufenden und kreiszylindrischen Scheibenumfangsfläche 97a, einer umlaufenden und kreiszylindrischen Scheibeninnenfläche 97b sowie zwei sich in einer zur Kupplungsachse 6 parallelen Richtung gegenüberliegenden Scheibenstirnflächen 97c;d auf. Der Durchmesser der Scheibeninnenfläche 97b entspricht dem Durchmesser der kreiszylindrischen Lagerfläche 83 des Ventilgrundkörpers 78. Die erste Scheibenstirnfläche 97c ist insbesondere ebenflächig ausgebildet und senkrecht zur Kupplungsachse 6. Des Weiteren weist die Kammerungs- und Führungshülse 77 einen Ringbund 98 auf, der von der ersten Scheibenstirnfläche 97c in axialer Richtung absteht. Der Ringbund 98 weist eine kreiszylindrische Bundaußenfläche 98a und eine kreiszylindrische Bundinnenfläche 98b sowie eine, insbesondere ebenflächige, Bundstirnfläche 98c auf, die senkrecht zur Ventillängsachse 6 ist. Der Durchmesser der Bundaußenfläche 98a entspricht dem Durchmesser der Scheibenumfangsfläche 97a, so dass diese eine einheitliche, kreiszylindrische Fläche bilden. Zudem entspricht der Durchmesser der Bundaußenfläche 98a dem Durchmesser ersten Ringumfangsfläche 93a des Ventildichtrings 76. Der Durchmesser der Bundinnenfläche 98b entspricht dem Durchmesser der zweiten Ringumfangsfläche 93b des Ventildichtrings 76.

Zudem weist die Kammerungs- und Führungshülse 77 eine Ringlagerbuchse 99 zur Lagerung des Ventildichtrings 76 auf, die ebenfalls von der ersten Scheibenstirnfläche 97c absteht. Die Ringlagerbuchse 99 weist eine Buchsenumfangsfläche 99a, eine Buchseninnenfläche 99b sowie eine, insbesondere ebenflächige, Buchsenstirnfläche 99c auf, die senkrecht zur Kupplungsachse 6 ist. Der Durchmesser der Buchseninnenfläche 99b entspricht dem Durchmesser der Scheibeninnenfläche 97b, so dass diese eine einheitliche, kreiszylindrische Fläche bilden. Die Lagerbuchse 99 überragt den Ringbund 98 in einer zur Ventillängsachse 73 parallelen axialen Richtung gesehen, steht also weiter von der ersten Scheibenstirnfläche 97c ab als der Ringbund 98. Zwischen der Bundinnenfläche 98b und der Buchsenumfangsfläche 99a wird zudem eine ringförmige Dichtringaufnahmenut 100 zur Aufnahme des Ventildichtrings 76 gebildet.

Die Kammerungs- und Führungshülse 77 dient nicht nur zur Kammerung des Ventildichtrings 76, sondern auch zur Gleitlagerung bzw. Gleitführung des Schließventils 50 in der Ventilsitzhülse 10. Dazu weist die Kammerungs- und Führungshülse 77 zudem mehrere, insbesondere drei, Zylinderrohrsegmente 101 auf, welche von der zweiten Scheibenstirnfläche 97d in axialer Richtung abstehen. Die Zylinderrohrsegmente 101 sind in Umfangsrichtung der Ringscheibe 97 gesehen gleichmäßig verteilt angeordnet und zueinander benachbart. Die Zylinderrohrsegmente 101 weisen jeweils eine Rohraußenfläche 101a und eine Rohrinnenfläche 101b sowie eine freie Rohrstirnfläche 101c auf. Der Durchmesser der Rohrinnenflächen 101b ist dabei vorzugsweise größer als der Durchmesser der Scheibeninnenfläche 97b. Der Durchmesser der Rohraußenflächen 101a ist zudem vorzugsweise kleiner als der Durchmesser der Scheibenumfangsfläche 97a.

Des Weiteren weist die Kammerungs- und Führungshülse 77 mehrere flügelartige Führungsstege 102 auf, wobei jeweils einer der Führungsstege 102 von der Rohraußenfläche 101a eines Zylinderrohrsegments 101 in radialer Richtung nach außen absteht. Zudem weisen die Führungsstege 102 eine Längserstreckung parallel zur Ventillängsachse 73 auf. Die Führungsstege 102 weisen außerdem jeweils eine konkav gewölbte Stegaußenfläche 102a auf, deren Durchmesser dem Durchmesser der Ventilführungsfläche 48 der Ventilsitzhülse 10 entspricht. Zudem weisen sie eine freie Stegstirnfläche 102b auf, die insbesondere bündig mit der jeweiligen Rohrstirnfläche 101c abschließt. Zwischen je zwei zueinander in Umfangsrichtung benachbarten Führungsstegen 102 wird jeweils ein Durchflussschlitz bzw. Durchflussspalt bzw. eine Durchflussnut 117 gebildet, durch die das Hydraulikmedium in axialer Richtung durchströmen kann.

Im zusammengebauten Zustand des Schließventils 50 sind die Ringlagerbuchse 99 und die Ringscheibe 97 um die kreiszylindrische Lagerfläche 83 des Kopfteils 79 herum angeordnet. Insbesondere liegen die Scheibeninnenfläche 97b und die Buchseninnenfläche 99b an der kreiszylindrische Lagerfläche 83 an. Zwischen der Scheibeninnenfläche 97b und der Buchseninnenfläche 99b sowie der kreiszylindrischen Lagerfläche 83 besteht eine Presspassung. Die Kammerungs- und Führungshülse 77 und der Ventilgrundkörper 78 sind somit fest miteinander verbunden, insbesondere mittels einer Presspassung. Die Kammerungs- und Führungshülse 77 bildet somit insbesondere einen Teil des Ventilkopfes 71. Zudem liegt die Buchsenstirnfläche 99c an der Dichtringanlagefläche 82 an.

Zwischen der Kammerungs- und Führungshülse 77 und dem Kopfteil 79 des Ventilgrundkörpers 78 ist zudem der Ventildichtring 76 angeordnet bzw. gekammert. Der Ventildichtring 76 ist formschlüssig zwischen der Kammerungs- und Führungshülse und dem Kopfteil 79 angeordnet und von diesen in axialer und radialer Richtung unverschieblich gehalten. Dazu liegt die erste Ringstirnfläche 95a an der Dichtringanlagefläche 82 an und die zweite Ringstirnfläche 95b liegt an der ersten Scheibenstirnfläche 97c an. Zudem liegt die Ringinnenfläche 94 an der Buchsenumfangsfläche 99a an, die zweite Ringumfangsfläche 93b liegt an der Bundinnenfläche 98b an und die Anlagefläche 93c liegt an der Bundstirnfläche 98c an. Dadurch ist der Ventildichtring 76 gekammert und vor dem strömendem Hydraulikmedium geschützt. Auch der Ventildichtring 76 bildet insbesondere einen Teil des Ventilkopfes 71.

Da der Durchmesser der ersten Ringumfangsfläche 93a dem Durchmesser der Bundaußenfläche 98a entspricht, sind die erste Ringumfangsfläche 93a und die Bundaußenfläche 98a in radialer Richtung bündig zueinander. Zudem stehen sie und infolgedessen auch die Ringdichtkante 96 in radialer Richtung etwas über die Kegelfläche 75 über. Dadurch wird gewährleistet, dass im geschlossenen Zustand des Schließventils 50 der Ventildichtring 76 beim Anpressen an die Ventilsitzfläche 45 elastisch verformt wird. So wird eine gute Dichtwirkung erreicht. Der Durchmesser der ersten Ringumfangsfläche 93a wird deshalb auch als Ventildichtungsdurchmesser D_{VD} bezeichnet.

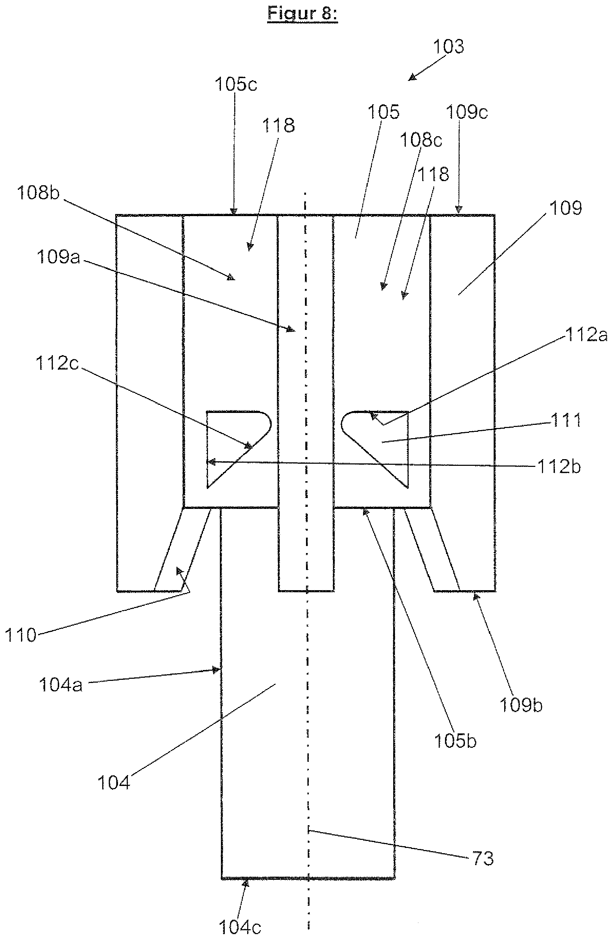

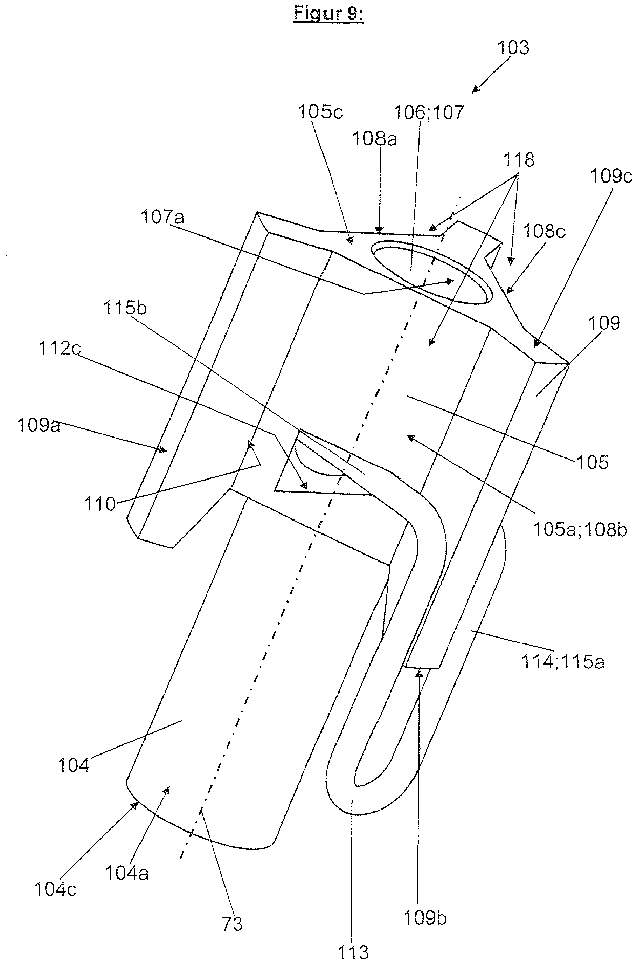

Die Ventileinrichtung 51 weist zudem eine Lagerhülse 103 (Fig. 1,2,4,8,9) zur verschieblichen Lagerung des Schließventils 50 auf. Die Lagerhülse 103 besteht ebenfalls vorzugsweise aus Metall, insbesondere aus Stahl oder Metallkunststoff-Kombination. Sie dient ebenfalls zur verschieblichen Lagerung des Schließventils 50 innerhalb der Ventilsitzhülse 10. Die zweite Lagerhülse 103 weist ein Führungsrohr 104 mit einer kreiszylindrischen Rohraußenfläche 104a und einer kreiszylindrischen Rohrinnenfläche 104b sowie einer freien, ringscheibenförmigen Rohrstirnfläche 104c auf.

Zudem weist die Lagerhülse 103 einen Führungskörper 105 auf. Der Führungskörper 105 weist eine in Richtung der Ventillängsachse 77 durch den Führungskörper 105 durchgehende Aussparung 106 auf, deren Durchmesser dem Durchmesser der Rohrinnenfläche 104b entspricht. Somit weist die Lagerhülse 103 eine in axialer Richtung durch die Lagerhülse 103 durchgehende Lageraussparung 107 mit einer kreiszylindrischen Aussparungswandung 107a auf.

Des Weiteren weist der Führungskörper 105 eine Führungskörperaußenfläche 105a sowie eine erste und zweite Führungskörperstirnfläche 105b;c auf. Das Führungsrohr 104 schließt sich an die erste Führungskörperstirnfläche 105b an und steht in axialer Richtung von dieser ab. Der Führungskörper 105 weist zudem vorzugsweise einen dreieckigen Querschnitt auf. Querschnitt meint einen Schnitt senkrecht zur Ventillängsachse 73. Infolgedessen besteht die Führungskörperaußenfläche 105a aus drei paarweise zueinander benachbarten und jeweils vorzugsweise ebenen Flächenabschnitten 108a;b;c, die insbesondere jeweils einen Winkel von 60° miteinander einschließen.

Der Führungskörper 105 weist zudem mehrere, insbesondere drei, flügelartige Führungsleisten 109 auf. Die Führungsleisten 109 stehen jeweils von der Führungskörperaußenfläche 105a in radialer Richtung in Bezug zur Ventillängsachse 73 nach außen ab. Die Führungsleisten 109 sind in Umfangsrichtung in Bezug zur Ventillängsachse 73 gesehen gleichmäßig verteilt angeordnet. Zwischen je zwei zueinander in Umfangsrichtung benachbarten Führungsleisten 109 wird jeweils ein Durchflussschlitz bzw. Durchflussspalt bzw. eine Durchflussnut 118 gebildet, durch die das Hydraulikmedium in axialer Richtung durchströmen kann.

Insbesondere sind die Führungsleisten 109 jeweils in einem Kantenbereich angeordnet, an dem sich jeweils zwei Flächenabschnitte 108a;b;c schneiden würden. Des Weiteren weisen die Führungsleisten 109 jeweils eine gewölbte Leistenaußenfläche 109a sowie eine erste und zweite Leistenstirnfläche 109b;c auf. Der Durchmesser der Leistenaußenflächen 109a entspricht dabei dem Durchmesser der Ventilführungsfläche 48 der Ventilsitzhülse 10. Zudem weisen die Führungsleisten 109 eine Längserstreckung in axialer Richtung auf. Dabei schließen die zweiten Leistenstirnflächen 109c alle bündig mit der zweiten Führungskörperstirnfläche 105c ab. Über die erste Führungskörperstirnfläche 105b ragen die Führungsleisten 109 zudem in axialer Richtung vorzugsweise über. Schräge Verbindungsflächen 110 verbinden die ersten Leistenstirnflächen 109b mit der ersten Führungskörperstirnfläche 105b.

Der Führungskörper 105 weist zudem zwei durch den Führungskörper 105 durchgehende Klammeraufnahmeaussparungen 111 auf. Die Klammeraufnahmeaussparungen 111 erstrecken sich vorzugsweise beide in dieselbe Richtung, welche senkrecht zur Ventillängsachse 73 ist, durch den Führungskörper 105 durch. Dabei erstrecken sich die Klammeraufnahmeaussparungen 111 beidseits der Ventillängsachse 73 durch den Führungskörper 105 hindurch. Insbesondere erstreckt sich die eine der beiden Klammeraufnahmeaussparungen 111 von dem ersten Flächenabschnitt 108a zu dem dazu benachbarten zweiten Flächenabschnitt 108b und die andere der beiden Klammeraufnahmeaussparungen 111 geht von dem ersten Flächenabschnitte 108a aus und mündet aber an dem dritten Flächenabschnitt 108c ins Freie.

Dabei weisen die Klammeraufnahmeaussparungen 111 einen dreieckigen Querschnitt auf. Insbesondere werden die Klammeraufnahmeaussparungen 111 begrenzt durch drei paarweise aneinander angrenzende Aussparungswandungen 112a;b;c. Die erste Aussparungswandung 112a erstreckt sich vorzugsweise senkrecht zur Ventillängsachse 77. Die zweite Aussparungswandung 112b erstreckt sich parallel zur Ventillängsachse 77 und die dritte Aussparungswandung 112c erstreckt sich von der ersten Aussparungswandung 112a aus schräg nach außen, also von der Ventillängsachse 77 weg, und auf die Hülsenstirnfläche 104c bzw. die erste Führungskörperstirnfläche 105b zu. Die beiden Klammeraufnahmeaussparungen 111 sind somit symmetrisch zu einer Ebene ausgebildet, welche die Ventillängsachse 73 enthält.

Die Ventileinrichtung 51 weist zur Verriegelung des Schließventils 50 in seiner maximal geöffneten Stellung eine vorzugsweise U-förmige Federklammer 113 auf. Die Federklammer 113 weist zwei miteinander verbundene und zueinander parallele Federarme 114 auf. Die Federarme 114 sind jeweils abgewinkelt ausgebildet und weisen einen Basisschenkel 115a und einen Klemmschenkel 115b auf. Der Basisschenkel 115a und der Klemmschenkel 115b eines Federarms 114 sind zueinander abgewinkelt. Zudem sind die beiden Basisschenkel 115a miteinander verbunden. Die Federklammer 113 besteht vorzugsweise aus Metall.

Wie bereits erläutert, weist die Ventileinrichtung 51 zur Verriegelung des Schließventils 50 in seiner maximal geöffneten Stellung zudem die Schiebehülse 92 auf. Die insbesondere aus Kunststoff bestehende Schiebehülse 92 weist eine kreiszylindrische Schiebehülsenaußenfläche 92a, eine kreiszylindrische Schiebehülseninnenfläche 92b sowie eine erste und eine zweite Schiebehülsenstirnkante 92c;d auf. Der Durchmesser der Schiebehülsenaußenfläche 92a entspricht dabei dem Durchmesser der Aussparungswandung 107a der Lageraussparung 107. Und der Durchmesser der Schiebehülseninnenfläche 92b entspricht dem Durchmesser der Schiebehülsenführungsfläche 88 des Ventilschafts 72.

Im zusammengebauten Zustand der Ventileinrichtung 51 (Fig. 1,2,4) ist die Schiebehülse 92 um einen begrenzten Betrag in Richtung der Ventillängsachse 73 hin und her verschieblich in der Schiebehülsenführungsnut 91 des Ventilschafts 72 geführt. Die Beweglichkeit der Schiebehülse 92 wird begrenzt durch die beiden Widerlagerflächen 87a;b.

Des Weiteren ist der Ventilschaft 72 innerhalb der Lagerhülse 103, insbesondere an der Lagerhülsenführungsfläche 86, in Richtung der Ventillängsachse 73 hin und her verschieblich geführt. Dabei ist die Lagerhülse 103 zudem um die Schiebehülse 92 herum angeordnet. Das heißt, die Schiebehülse 92 ist innerhalb der Lagerhülse 103, insbesondere im Bereich des Führungskörpers 105 angeordnet, wobei die Aussparungswandung 107a der Lageraussparung 107 an der Schiebehülsenaußenfläche 92a anliegt. Die beiden Klemmschenkel 115b der Federklammer 113 sind zudem von dem zweiten bzw. dritten Flächenabschnitt 108b;c aus durch die Klammeraufnahmeaussparungen 111 durchgeführt. Die beiden Basisschenkel 115a erstrecken sich entlang des Führungsrohres 104 zur Rohrstirnfläche 104c hin. Im nicht gekuppelten Zustand, also in der geschlossenen Stellung des Schließventils 50, (Fig. 1,2,3) umgreifen die beiden Klemmschenkel 115b die Schiebehülse 92. Die beiden Klemmschenkel 115b werden an die Schiebehülsenaußenfläche 92a durch Federkraft angedrückt.

Des Weiteren liegen die Leistenaußenflächen 109a an der Ventilführungsfläche 48 der Ventilsitzhülse 10 formschlüssig an. Zwischen den einzelnen Führungsleisten 109 sind und der Ventilführungsfläche 48 sind aufgrund der Durchflussnuten 118 kanalartige Zwischenräume zum Durchfluss des Hydraulikmediums gebildet. Zudem liegen die zweiten Leistenstirnflächen 109c an der zweiten Stufenfläche 68 der Drucklagerhülse 11 an. Dadurch ist die Bewegung der zweiten Lagerhülse 103 in Richtung auf das Anschlussende 1b zu blockiert.

Die Schließfeder 70, bei der es sich vorzugsweise um eine Schraubenfeder handelt, ist um den Ventilschaft 72 und das Führungsrohr 104 der Lagerhülse 103 herum angeordnet. Sie stützt sich einendig an dem Ventilkopf 71, insbesondere der Kammerungs- und Führungshülse 77 und andernendig an der Lagerhülse 103 ab. Insbesondere ist die Schließfeder 70 einendig zwischen den Zylinderrohrsegmenten 101 der Kammerungs- und Führungshülse 77 angeordnet und stützt sich an der zweiten Scheibenstirnfläche 97d ab. Zudem ist die Schließfeder 70 andernendig zwischen den Führungsleisten 109 angeordnet und stützt sich an der ersten Führungskörperstirnfläche 105b ab. Dadurch drängt die Schließfeder 70 die Kammerungs- und Führungshülse 77 und die Lagerhülse 103 auseinander. Bzw. die Schließfeder 70 drängt den Ventilkopf 71 auf die Ventilsitzfläche 45 zu. Bzw. die Schließfeder 70 treibt das Schließventil 50 in eine Ventilschließrichtung 119 an.

Außerdem liegen die Stegaußenflächen 102a der Führungsstege 102 an der Führungsfläche 48 der Ventilsitzhülse 10 an und sind dort gleitgeführt. Zwischen den einzelnen Führungsstegen 102, der Ventilschaftaußenfläche 72a und der Führungsfläche 102 sind aufgrund der Durchflussnuten 117 Strömungskanäle zum Durchfluss des Hydraulikmediums gebildet.

In der geschlossenen Stellung des Schließventils 50 (Fig. 1-3) liegt die Ringdichtkante 96 des Ventildichtrings 76 an der Ventilsitzfläche 45 dichtend an bzw. wird an diese angepresst, wobei der Ventildichtring 76 elastisch verformt wird. Der Ventildichtring wird maximal soweit verformt, dass die Kegelfläche 75 ebenfalls an der Ventilsitzfläche 45 anliegt. In dieser Stellung kann kein Hydraulikmedium durch die Kupplungsmuffe 2 hindurch fließen.

### Das Öffnen des Schließventils 50 erfolgt wie folgt:

Beim Steckkupplungsvorgang, welcher insbesondere bei druckloser Kupplungsmuffe 2 erfolgt, wird in an sich bekannter Weise ein Kupplungsstecker (nicht dargestellt) in die Kupplungsmuffe 2 eingesteckt, insbesondere bis er an der Steckeranschlagfläche 44 anstößt. Der Kupplungsstecker weist ebenfalls ein Kupplungsgehäuse mit einem Schließventil auf. Beim Zusammenstecken wird das Gehäuseinnenteil 5 gegen die Kraft der Verriegelungsfeder 69 auf das Anschlussende 1b zu verschoben, so dass die Sperrkugeln 52b in die zweite Kugelaufnahmenut 13b radial nach außen ausweichen können. Der Kupplungsstecker kann dadurch weiter bis auf Anschlag eingeschoben werden. Durch die Kraft der Verrieglungsfeder 69 wird das Gehäuseinnenteil 5 anschließend wieder in seine Ausgangsposition verschoben, so dass die Sperrkugeln 52b in an sich bekannter Weise in eine Verriegelungsnut oder dergleichen des Kupplungssteckers verriegelnd eingreifen. Die beiden Kupplungsteile sind dann miteinander verriegelt.

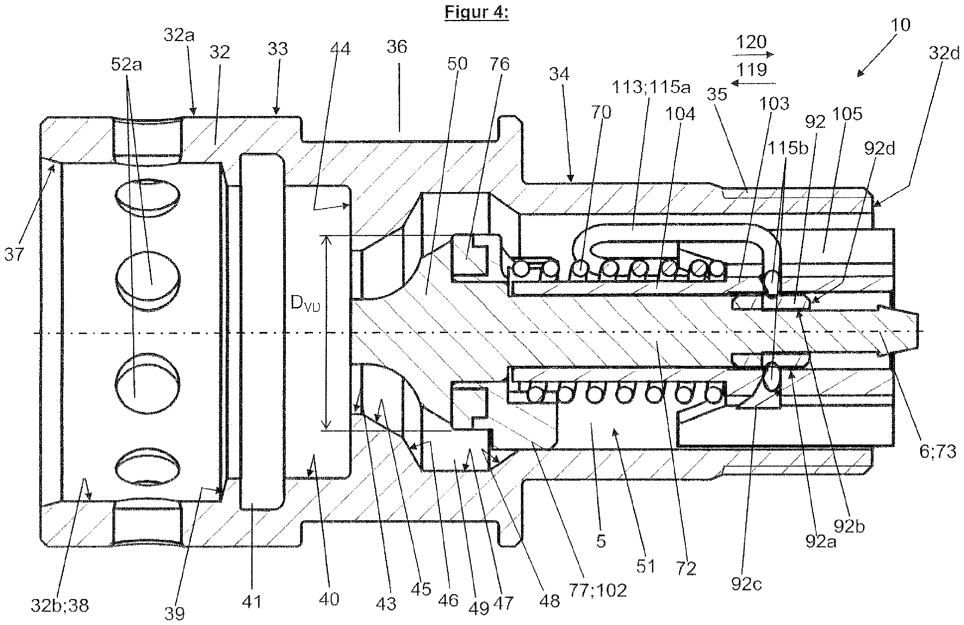

Beim Kupplungsvorgang treffen zudem die beiden Stoßflächen 80 der Ventilköpfe 71 aufeinander, so dass die Schließventile 50 selbsttätig entgegen die Kraft der Schließfeder 70 von der Ventilsitzfläche 45 abgehoben werden. Sie werden in eine zur Ventilschließrichtung 119 entgegengesetzte Ventilöffnungsrichtung 120 verschoben. Das Schließventil 50 wird auf das jeweilige Anschlussende 1b zu gefahren, wobei die Lagerhülse 103 ortsfest bleibt. Dabei gleiten die Klemmschenkel 115b außen an der Schiebehülse 92 entlang zur ersten Schiebehülsenstirnkante 92c hin und rutschen von der Schiebehülse 92 herunter. Die Klemmschenkel 115b rasten dann in die Schiebehülsenführungsnut 91 zwischen der ersten Widerlagerfläche 87a und der ersten Schiebehülsenstirnkante 92c ein. Dadurch kann das Schließventil 50 nicht weiter auf das Anschlussende 1b zu in Ventilöffnungsrichtung 120 gefahren werden. Das Schließventil 50 ist in seiner maximal geöffneten Stellung verriegelt (Fig. 4). Insbesondre ist das Schließventil 50 derart verriegelt, dass es in Ventilöffnungsrichtung 120 unverschieblich ist.

Wie insbesondere in den Figuren 4 und 5 zu erkennen, ist in der maximal geöffneten und verriegelten Stellung des Schließventils 50 die erste Ringumfangsfläche 93a radial gegenüberliegend zur Querschnittserweiterung 49 angeordnet. Dadurch sind erfindungsgemäß bei maximal geöffnetem Schließventil 50 große Durchflussmengen von mindestens 240 L/Min. problemlos möglich. Dabei wurde erfindungsgemäß heraus gefunden, dass es besonders auf das Verhältnis von Erweiterungsdurchmesser D_{EW} zu einem Ventildichtungsdurchmesser D_{VD} (Fig. 4) ankommt. Das Verhältnis D_{EW}/D_{VD} liegt erfindungsgemäß bei 1,35 bis 1,45, vorzugsweise bei 1,4 bis 1,45. Dabei beträgt der Ventildichtungsdurchmesser D_{VD} vorzugsweise 13,2 bis 13,7 mm, bei dieser Baugröße der Kupplung. Und der Erweiterungsdurchmesser D_{EW} beträgt vorzugsweise 19,5 bis 20 mm. Das Verhältnis D_{EW}/D_{VD} kann aber auch auf andere Abmessungen von Steckkupplungen angewendet werden.

Beim Entkuppeln, wenn die beiden Kupplungsteile 1 ;2 wieder auseinander gezogen werden, werden die Schließventile 50 selbststätig durch die Kraft der Schließfedern 70 in ihre geschlossene Stellung verfahren. Dabei gleiten die Klemmschenkel 115b an den schrägen Aussparungswandungen 112a der Klammeraufnahmeaussparungen 111 entlang und werden dadurch auseinander gedrängt. Infolgedessen gleiten die Klemmschenkel 115b wieder auf die Schiebehülse 92 hinauf und an der Schiebehülsenaußenfläche 92a entlang.

Vorteil der erfindungsgemäßen Schnellkupplung ist, dass sie aufgrund der Querschnittserweiterung 49 und insbesondere der aufeinander abgestimmten Abmessungen des Ventildichtringes 76 und der Querschnittserweiterung 49 für ein erhöhtes Durchflussvolumen von mindestens 240 L/Min geeignet ist. Dabei musste die Baulänge des bekannten Kupplungsteils nicht verlängert werden. Auch wurden die Außenabmessungen beibehalten. Die Geometrien des Durchflusskanals 5 und des Ventildichtrings 76 wurden optimiert und aufeinander abgestimmt. Der trapezförmige Querschnitt der Querschnittserweiterung 49 ist dabei besonders vorteilhaft, weil diese strömungsoptimierte Kontur die bei diesem hohen Durchflussvolumen von 240 L/min auftretende turbulente Strömung minimiert. Die Querschnittserweiterung 49 kann aber auch einen anderen Querschnitt, z.B. einen rechteckigen oder bogenförmigen oder anderen strömungsgünstigen Querschnitt aufweisen. In diesem Fall ist der maßgebliche Erweiterungsdurchmesser D_{EW} der maximale Durchmesser der Querschnittserweiterung 49.

Zwar liegt es im Rahmen der Erfindung anstelle der einstückigen Lagerhülse eine bekannte, zweigeteilte Lagerhülse zu verwenden. Vorteilhaft an der einstückigen Lagerhülse ist aber, dass die Montage erheblich vereinfacht wird. Auch ist die Toleranzkette kürzer, so dass die Lagerhülse mit einer höheren Genauigkeit gefertigt werden kann. Dadurch wird auch eine sichere Verriegelung des Schließventils gewährleistet.

Des Weiteren muss der Führungskörper der Lagerhülse keinen dreieckigen Querschnitt aufweisen, sondern kann zum Beispiel auch kegelförmig ausgebildet sein und sich zum Anschlussende 1b hin verjüngen oder zylindrisch ausgebildet sein. Der dreieckige Querschnitt ist allerdings besonders strömungsgünstig und reduziert den Druckverlust.

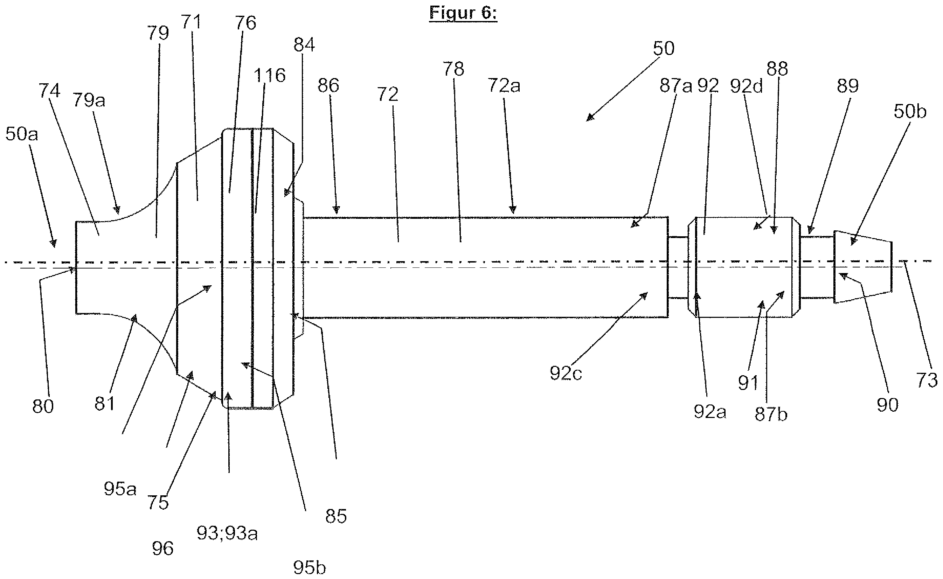

Des Weiteren ist auch die Kammerungs- und Führungshülse besonders vorteilhaft. Diese gewährleistet, dass das Schließventil zusätzlich 3-fach abgestützt ist. Dadurch wird das Kippen und Flattern des Schließventils bei hoher Durchflussmenge verhindert. Die koaxiale Führung der Lagerhülse wird also erhöht. Das ist sehr wichtig. Denn dadurch wird auch eine Blockade des Schließventils verhindert. Es liegt aber auch im Rahmen der Erfindung, dass der Ventildichtring lediglich durch eine an sich bekannte Kammerungshülse 116 gekammert ist, die keine Führungsstege und Zylinderrohrsegmente aufweist, ansonsten aber im Wesentlichen identisch ausgebildet ist (Fig. 1, 6). Im Rahmen der Erfindung liegt es zudem auch, dass die Kammerungs- und Führungshülse anstelle der Zylinderrohrsegmente ein durchgehendes Zylinderrohr aufweist.

Bei dem erfindungsgemäßen Kupplungsteil kann es sich zudem selbstverständlich auch um einen Kupplungsstecker handeln. Des Weiteren liegt es im Rahmen der Erfindung, dass das jeweilige Gegenkupplungsteil identisch oder anders ausgebildet ist bezüglich der Querschnittserweiterung.

Anstelle der Sperrkugelverriegelung kann zudem auch eine andere Verriegelungseinrichtung zur lösbaren Verriegelung der beiden Kupplungsteile vorhanden sein.

## Patentansprüche

1. Kupplungsteil (1), insbesondere Kupplungsmuffe (2), für eine Schnellkupplung für Hochdruckhydraulikleitungen aufweisend ein Kupplungsgehäuse (3) mit einem Durchflusskanal (5) und eine innerhalb des Durchflusskanals (5) angeordneten Ventileinrichtung (51) mit einem stößelartigen Schließventil (50) zum Verschließen des Durchflusskanals (5) im ungekuppelten Zustand des Kupplungsteils (1), wobei das Kupplungsgehäuse (3) eine konische Ventilsitzfläche (45) aufweist, und das Schließventil (50) eine Ventillängsachse (73), einen Ventilschaft (72) sowie einen Ventilkopf (71) mit einer Kegelfläche (75) und einem Ventildichtring (76) zur dichtenden Anlage an der Ventilsitzfläche (45) aufweist, wobei der Ventildichtring (76) eine in radialer Richtung über die Kegelfläche (75) überstehende kreiszylindrische Ringumfangsfläche (93a) aufweist, welche einen Ventildichtungsdurchmesser D_{VD} aufweist, wobei der Durchflusskanal (5) eine ringförmige Querschnittserweiterung (49) mit einem maximalen Erweiterungsdurchmesser D_{EW} aufweist, wobei die Querschnittserweiterung (49) in maximal geöffneter Stellung des Schließventils (50) der Ringumfangsfläche (93a) radial in Bezug zur Ventillängsachse (73) gegenüber liegt,
**dadurch gekennzeichnet, dass**
das Schließventil (50) in Richtung der Ventillängsachse (73) gesehen ein erstes, kopfseitiges Ventilende (50a) und ein zweites Ventilende (50b) aufweist, und die Ventileinrichtung (51) am zweiten Ventilende (50b) eine Lagerhülse (103) aufweist, mittels der das Schließventil (50) in dem Kupplungsgehäuse (3) in axialer Richtung hin- und her verschiebbar gleitgelagert ist, dass das Kupplungsteil (1) eine Verriegelungseinrichtung zum Verriegeln des Schließventils (50) in seiner geöffneten Stellung aufweist, wobei die Verriegelungseinrichtung aufweist:
a) eine, insbesondere U-förmige, Federklammer (113) mit zwei Federarmen (114),
b) die Lagerhülse (103) mit
- einem Führungskörper (105) mit radial vorspringenden Führungselementen (109), mittels denen die Lagerhülse (103) in dem Kupplungsgehäuse (3) gelagert ist, und zwei durch den Führungskörper (105) durchgehenden Klammeraufnahmeaussparungen (111), welche von jeweils einem der Federarme (114) durchgriffen werden,
- einem Führungsrohr (104), das sich einendig an den Führungskörper (105) anschließt und in axialer Richtung von diesem absteht, und
- einer in axialer Richtung durch die Lagerhülse (103) durchgehende Lageraussparung (107),
c) eine in axialer Richtung in einer Schiebehülsenführungsnut (91) des Ventilschafts (72) um einen begrenzten Betrag hin- und her verschiebbar gelagerte Schiebehülse (92),
wobei
d) die Schiebehülse (92) und der Ventilschaft (72) jeweils in der Lageraussparung (107) in axialer Richtung verschiebbar gleitgelagert sind,
e) die Schiebehülse (92), die Federklammer (113) und die Schiebehülsenführungsnut (91) das Schließventil (50) in seiner geöffneten Stellung verriegelnd zusammen wirken, und
f) der Führungskörper (105) und das Führungsrohr (104) einstückig oder zweigeteilt ausgebildet sind.

2. Kupplungsteil (1) nach Anspruch 1,
**dadurch gekennzeichnet, dass**
das Verhältnis D_{EW}/D_{VD} 1,35 bis 1,6, vorzugsweise 1,4 bis 1,45 beträgt.

3. Kupplungsteil (1) nach Anspruch 1 oder 2,
**dadurch gekennzeichnet, dass**
die Querschnittserweiterung (49) eine kreiszylindrische Erweiterungsfläche (47) aufweist, die den Erweiterungsdurchmesser D_{EW} aufweist.

4. Kupplungsteil (1) nach einem der vorhergehenden Ansprüche,
**dadurch gekennzeichnet, dass**
die Querschnittserweiterung (49) einen trapezförmigen oder rechteckigen oder bogenförmigen Querschnitt aufweist, wobei die Querschnittserweiterung (49) vorzugsweise eine erste konische, sich erweiternde Übergangsfläche (46a), die kreiszylindrische Erweiterungsfläche (47) und eine zweite konische, sich verjüngende Übergangsfläche (46b) aufweist, wobei die Erweiterungsfläche (47) zwischen den beiden Übergangsflächen (46a;46b) angeordnet ist.

5. Kupplungsteil (1) nach einem der vorhergehenden Ansprüche,
**dadurch gekennzeichnet, dass**
sich die Querschnittserweiterung (49) in axialer Richtung direkt an die Ventilsitzfläche (45) anschließt.

6. Kupplungsteil (1) nach einem der vorhergehenden Ansprüche,
**dadurch gekennzeichnet, dass**
das Kupplungsgehäuse (3) eine kreiszylindrische Fläche, insbesondere eine Ventilführungsfläche (48), aufweist, welche sich in axialer Richtung direkt an die Querschnittserweiterung (49) anschließt und an welcher insbesondere das Schließventil (5) gleitgelagert ist.

7. Kupplungsteil (1) nach einem der vorhergehenden Ansprüche,
**dadurch gekennzeichnet, dass**
das Schließventil (50) eine Kammerungs- und Führungshülse (77) zur Kammerung des Ventildichtrings (76) aufweist, wobei die Kammerungs- und Führungshülse (77) mehrere, insbesondere drei, in Umfangsrichtung zueinander benachbarte, jeweils radial vorspringende, Führungselemente (102) aufweist, mittels denen die Kammerungs- und Führungshülse (77) in dem Kupplungsgehäuse (3) in axialer Richtung hin- und her verschiebbar gleitgelagert ist, wobei
es sich bei den Führungselementen (77) vorzugsweise um in radialer Richtung vorspringende Führungsstege (102) handelt, die jeweils eine Längserstreckung parallel zur Ventillängsachse (73) aufweisen und die jeweils eine konkav gewölbte, zylindrische Stegaußenfläche (102a) aufweisen, wobei zwischen je zwei zueinander in Umfangsrichtung benachbarten Führungselementen (102), insbesondere den Führungsstegen (102), eine in axialer Richtung durchströmbare Durchflussnut (117) gebildet wird.

8. Kupplungsteil (1) nach Anspruch 7,
**dadurch gekennzeichnet, dass**
Schließventil (50) einen Ventilgrundkörper (78) aufweist, der ein Kopfteil (79) sowie den Ventilschaft (72) aufweist, der sich an das Kopfteil (79) anschließt, wobei der Ventildichtring (76) in axialer Richtung zwischen dem Kopfteil (79) und der Kammerungs- und Führungshülse (77) angeordnet und in axialer und radialer Richtung unverschieblich gehalten ist, wobei vorzugsweise
die Kammerungs- und Führungshülse (77) unverschieblich und unverdrehbar, insbesondere mittels einer Presspassung, auf dem Ventilgrundkörper (78) gelagert ist.

9. Kupplungsteil (1) nach einem der vorhergehenden Ansprüche,
**dadurch gekennzeichnet, dass**
das Schließventil (50) eine geschlossene, den Durchflusskanal (5) verschließende, Stellung und eine maximal geöffnete, den Durchflusskanal (5) nicht verschließende, Stellung aufweist,
wobei das Schließventil (50) von der geschlossenen Stellung in die maximal geöffnete Stellung in eine axiale Ventilöffnungsrichtung (120) in dem Kupplungsgehäuses (3), insbesondere relativ zur Lagerhülse (103), verschiebbar gleitgelagert ist, und
wobei das Schließventil (50) von der geöffneten Stellung in die maximal geschlossene Stellung in eine axiale, zur Ventilöffnungsrichtung (120) entgegengesetzte, Ventilschließrichtung (119) in dem Kupplungsgehäuses (3), insbesondere relativ zur Lagerhülse (103), verschiebbar gleitgelagert ist,
wobei vorzugsweise das Schließventil (50) mittels der Verriegelungseinrichtung derart in seiner maximal geöffneten Stellung verriegelbar ist, dass das Schließventil (50) in Ventilöffnungsrichtung (120) unverschieblich in dem Kupplungsgehäuse (3) gelagert ist.

10. Kupplungsteil (1) nach einem der vorhergehenden Ansprüche,
**dadurch gekennzeichnet, dass**
die beiden Federarme (114) den Ventilschaft (72) beidseits der Ventillängsachse (73) umgreifen und in der maximal geöffneten Stellung des Schließventils (5) in die Schiebehülsenführungsnut (91) eingerastet sind, so dass das Schließventil (50) in Ventilöffnungsrichtung (120) unverschieblich ist, und in der geschlossenen Stellung des Schließventils (50) die Schiebehülse (92) umgreifen, so dass das Schließventil (50) in axialer Richtung in dem Kupplungsgehäuse (3), und insbesondere relativ zur Lagerhülse (103), insbesondere in Ventilöffnungsrichtung verschiebbar ist.

11. Kupplungsteil (1) nach einem der vorhergehenden Ansprüche,
**dadurch gekennzeichnet, dass**
die Ventileinrichtung (51) eine Schließfeder (70) aufweist, mit der das Schließventil (50) in Ventilschließrichtung (119) antreibbar in Verbindung steht, wobei sich die Schließfeder (70) vorzugsweise einendig am Ventilkopf (71) und andernendig an der Lagerhülse (103) abstützt.

12. Kupplungsteil (1) nach einem der vorhergehenden Ansprüche,
**dadurch gekennzeichnet, dass**
dass die Lagerhülse (103) Aufspreizmittel zum Aufspreizen der Federarme (114) beim Verfahren des Schließventils (50) von seiner maximal geöffneten in seine geschlossene Stellung aufweist, mittels denen die Federarme (114) mittels der Aufspreizmittel derart aufspreizbar sind, dass sie aus der Schiebehülseführungsnut (91) heraus drückbar sind und auf die Schiebehülse (92) aufschiebbar sind.

13. Schnellkupplung, insbesondere Steckkupplung, für Hochdruckhydraulikleitungen, aufweisend zwei miteinander lösbar verriegelbare Kupplungsteile (1), insbesondere eine Kupplungsmuffe (2) und einen Kupplungsstecker, wobei die Kupplungsteile (1) jeweils ein Kupplungsgehäuse (3) mit einem Durchflusskanal (5) und eine innerhalb des Durchflusskanals (5) angeordnete Ventileinrichtung (51) mit einem stößelartigen Schließventil (50) zum Verschließen des Durchflusskanals (5) im ungekuppelten Zustand der Schnellkupplung aufweisen,
**dadurch gekennzeichnet, dass**
zumindest eines der beiden Kupplungsteile (1) gemäß einem der vorhergehenden Ansprüche ausgebildet ist.

## Claims

1. A coupling part (1), especially a coupling cuff (2), for a quick-release coupling for high-pressure hydraulic lines comprising a coupling housing (3) having a through-flow channel (5) with a valve device (51) disposed within the through-flow channel (5) having a tappet-shaped closing valve (50) for closing off the through-flow channel (5) in an uncoupled state of the coupling part (1);
wherein the coupling housing (3) contains a conical valve seat surface (45) and the closing valve (50) has a longitudinal valve axis (73), a valve stem (72) and a valve head (71), said valve head (71) having a conical surface (75) and a valve sealing ring (76) for sealing contact with the valve seat surface (45), wherein the valve sealing ring (76) has a ring circumference surface (93a) that projects beyond the conical surface (75) in a radial direction and has a valve seal diameter D_{VD},
wherein the flow-through channel (5) has a ring-shaped cross-sectional widened region (49) having a maximal expansion diameter D_{EW}, wherein the cross-sectional widened region (49) lies radially opposite the ring circumference surface (93a) in a maximally open position of the closing valve (50) with regard to the longitudinal valve axis (73),
**characterized in that**
the closing valve (50), viewed in a direction of the longitudinal valve axis (73), has a first, head-side valve end (50a) and a second valve end (50b), and the valve device (51) has a bearing sleeve (103) at the second valve end (50b), wherein the closing valve (50) is mounted by the bearing sleeve (103) so as to slide and to be displaceable, back and forth, in the coupling housing (3), in an axial direction, that the coupling part (1) has a locking device for locking the closing valve (50) in an open position, wherein the locking device has:
a) a spring clamp (113), especially a U-shaped one, having two spring arms (114),
b) the bearing sleeve (103) which is configured with
- a guide body (105) having radially projecting guide elements (109), wherein the bearing sleeve (103) is mounted in the coupling housing (3), and two clamp accommodation recesses (111) that pass through the guide body (105), wherein one of the spring arms (114) respectively passes through the clamp accommodation recesses (119),
- a guide pipe (104) that follows the guide body (105) at one end and projects away from the guide body in the axial direction, and
- a bearing recess (107) that passes through the bearing sleeve (103) in the axial direction,
c) a sliding sleeve (92) that is mounted so as to be displaceable, back and forth, in a sliding sleeve guide groove (91) of the valve stem (72), by a limited amount, in the axial direction,
wherein
d) the sliding sleeve (92) and the valve stem (72) are each mounted in the bearing recess (107) so as to slide and be displaceable in the axial direction,
e) the sliding sleeve (92), the spring clamp (113), and the sliding sleeve guide groove (91) interact to lock the closing valve (50) in an open position, and
f) the guide body (105) and the guide pipe (104) are configured in one piece or in two pieces.

2. The coupling part according to claim 1,
**characterized in that**
a ratio D_{EW}/D_{VD} amounts to 1.35 to 1.6, preferably 1.4 to 1.45.

3. The coupling part according to claim 1 or 2,
**characterized in that**
the cross-sectional widened region (49) has a circular-cylindrical expansion surface (47) that has the expansion diameter D_{EW}.

4. The coupling part (1) according to one of the preceding claims, **characterized in that**
the cross-sectional widened region (49) has a trapezoid or rectangular or arc-shaped cross-section,
wherein the cross-sectional widened region (49) preferably has a first conical, widening transition surface (46a, the circular-cylindrical expansion surface (47) and a second conical, narrowing transition surface (46b), wherein the expansion surface (47) is disposed between the first and second transition surfaces (46a;46b).

5. The coupling part (1) according to one of the preceding claims,
**characterized in that**
the cross-sectional widened region (49) directly follows the valve seat surface (45) directly in an axial direction.

6. The coupling part (1) according to one of the preceding claims,
**characterized in that**
the coupling housing (3) has a circular-cylindrical surface, in particular a valve guide surface (48), directly following the cross-sectional widened region (49) in an axial direction, and upon which the closing valve (5), is slidably mounted.

7. The coupling part (1) according to one of the preceding claims,
**characterized in that**
the closing valve (50) has a chambering and guide sleeve (77) for chambering of the valve sealing ring (76), wherein the chambering and guide sleeve (77) has a plurality, in particular three, of guide elements (77)that are adjacent to one another in a circumference direction, by means of which the guide element (77) projects radially, and wherein the chambering and guide sleeve (77) is mounted by the guide elements (77)so as toslide and be displaceable, back and forth, in the coupling housing (3), in an axial direction,
wherein the guide elements (77) are preferably guide crosspieces (102) that project in the radial direction, wherein each guide element has a longitudinal expanse parallel to the longitudinal valve axis (73) and a concavely arched, cylindrical outer crosspiece surface (102a), wherein a through-flow groove (117) is formed between two guide elements (77) adjacent to each other in particular the guide crosspieces (102) in the circumference direction.

8. The coupling part (1) according to claim 7,
**characterized in that**
the closing valve (50) has a valve body (78) that has a head part (79) and a valve stem (72) following the head part (79), wherein the valve sealing ring (76) is disposed between the head part (79) and the chambering and guide sleeve (77) in an axial direction, and held so as to be non-displaceable in the axial direction and a radial direction,
wherein preferably the chambering and guide sleeve (77) is mounted on the valve body (78) so as to be non-displaceable and non-rotatable, in particular by means of a press fit.

9. The coupling part (1) according to one of the preceding claims,
**characterized in that**
the closing valve (50) has a closed position, closing the through-flow channel (5) off, and a maximally open position, not closing the through-flow channel (5), wherein the closing valve (50) is mounted to slide and be displaceable from the closed position into the maximally open position (120), in an axial valve opening direction, in the coupling housing (3), particularly relative to the bearing sleeve (103),
and
wherein the closing valve (50) is mounted to slide and be displaceable from the open position into the maximally closed position in an axial valve closing direction (119), opposite to the valve opening direction (120), in the coupling housing (3), particularly relative to the bearing sleeve (103),
wherein preferably the closing valve (50) is lockable in the maximally open position of the locking device, in such a manner that the closing valve (50) is mounted in the coupling housing (3) so as to be non-displaceable in the valve opening direction (120).

10. The coupling part (1) according to one of the preceding claims,
**characterized in that**
both spring arms (114) engage around the valve stem (72) on both sides of the longitudinal valve axis (73) and are engaged in the sliding valve guide groove (91) in the maximally open position of the closing valve (5), so that the closing valve (50) is non-displaceable in the valve opening position (120), and engage around the sliding sleeve (92) in the closed position of the closing valve (50), so that the closing valve (50) is displaceable in the axial direction in the coupling housing (3), in particular relative to the bearing sleeve (103), in particular in the opening direction of the valve.

11. The coupling part (1) according to one of the preceding claims,
**characterized in that**
the valve device(51) has a closing spring (70), in contact with the closing valve (50) so as to drive the closing valve in a valve closing direction (119), wherein the closing spring (70) is supported preferably on the valve head (71) at one end of the closing spring and on the bearing sleeve (103) at the other end of the closing spring.

12. The coupling part (1) according to one of the preceding claims,
**characterized in that**
the bearing sleeve (103) has a spreader for spreading the spring arms (114) during movement of the closing valve (50) from the maximally open position to the closed position, wherein the spring arms (114) are spread open using the spreader, in such a manner that the spring arms are pressed out of the sliding sleeve guide groove (91) and pushed onto the sliding sleeve (92).

13. A quick-release coupling, in particular plug-in coupling, for high-pressure hydraulic lines comprising two coupling parts (1) releasably lockable together with one another, in particular a coupling sleeve (2) and a coupling plug wherein each coupling part (1) has a coupling housing (3) having a through-flow channel (5) and a valve device (51) disposed within the through-flow channel (5) wherein each valve device has a tappet-shaped closing valve (50) for closing the through-flow channel (5) in an uncoupled state of the quick-release coupling
**characterized in that**
at least one of the coupling parts (1) is formed according to one preceding claims.

## Revendications

1. Pièce de raccord (1), en particulier manchon de raccord (2) pour un raccord rapide pour des conduites hydrauliques à haute pression présentant un boîtier de raccord (3) avec un canal d'écoulement (5) et un dispositif de soupape (51) agencé dans le canal d'écoulement (5) avec une soupape de fermeture (50) de type poussoir pour la fermeture du canal d'écoulement (5) à l'état non couplé de la pièce de raccord (1),
dans laquelle le boîtier de raccord (3) présente une surface de siège de soupape (45) conique et la soupape de fermeture (50) présente un axe longitudinal de soupape (73), une tige de soupape (72) ainsi qu'une tête de soupape (71) avec une surface conique (75) et un anneau étanche de soupape (76) pour l'appui étanche contre la surface de siège de soupape (45), dans laquelle l'anneau étanche de soupape (76) présente une surface périphérique annulaire (93a) cylindrique et circulaire dépassant dans le sens radial de la surface conique (75), qui présente un diamètre de garniture de soupape D_{VD};
dans laquelle le canal d'écoulement (5) présente un élargissement de section transversale (49) annulaire avec un diamètre d'élargissement D_{EW} maximal, dans laquelle l'élargissement de section transversale (49) est opposé, dans la position ouverte au maximum de la soupape de fermeture (50), à la surface périphérique annulaire (93a) radialement par rapport à l'axe longitudinal de soupape (73),
**caractérisée en ce que**
la soupape de fermeture (50) présente, vu en direction de l'axe longitudinal de soupape (73), une première extrémité de soupape (50a) côté tête et une seconde extrémité de soupape (50b), et le dispositif de soupape (51) présente sur la seconde extrémité de soupape (50b), une douille de palier (103), à l'aide de laquelle la soupape de fermeture (50) est montée sur un palier lisse dans le boîtier de raccord (3) de manière à pouvoir se déplacer alternativement dans le sens axial, **en ce que** la pièce de raccord (1) présente un dispositif de verrouillage pour le verrouillage de la soupape de fermeture (50) dans sa position ouverte, dans laquelle le dispositif de verrouillage présente:
a) une pince à ressort (113) en particulier en forme de U avec deux bras de ressort (114),
b) la douille de palier (103) avec
- un corps de guidage (105) avec des éléments de guidage (109) faisant saillie radialement, à l'aide desquels la douille de palier (103) est logée dans le boîtier de raccord (3) et deux évidements de logement de pince (111) traversant le corps de guidage (105) qui sont traversés respectivement par un des bras de ressort (114),
- un tube de guidage (104) qui se raccorde sur une extrémité au corps de guidage (105) et dépasse dans le sens axial de celui-ci, et
- un évidement de palier (107) traversant dans le sens axial la douille de palier (103),
c) une douille coulissante (92) logée de manière à pouvoir se déplacer alternativement dans le sens axial dans une rainure de guidage de douille coulissante (91) de la tige de soupape (72) d'une étendue limitée,
dans laquelle
d) la douille coulissante (92) et la tige de soupape (72) sont montées sur un palier lisse respectivement dans l'évidement de palier (107) de manière à pouvoir se déplacer dans le sens axial,
e) la douille coulissante (92), la pince de ressort (113) et la rainure de guidage de douille coulissante (91) agissent ensemble de manière à verrouiller la soupape de fermeture (50) dans sa position ouverte et
f) le corps de guidage (105) et le tube de guidage (104) sont réalisés d'un seul tenant ou en deux parties.

2. Pièce de raccord (1) selon la revendication 1,
**caractérisée en ce que**
le rapport D_{EW}/D_{VD} est compris entre 1,35 et 1,6, de préférence entre 1,4 et 1,45.

3. Pièce de raccord (1) selon la revendication 1 ou 2,
**caractérisée en ce que**
l'élargissement de section transversale (49) présente une surface d'élargissement cylindrique et circulaire (47) qui présente le diamètre d'élargissement D_{EW}.

4. Pièce de raccord (1) selon l'une quelconque des revendications précédentes, **caractérisée en ce que**
l'élargissement de section transversale (49) présente une section transversale en forme de trapèze ou rectangulaire ou arquée, dans laquelle l'élargissement de section transversale (49) présente de préférence une première surface de passage (46a) conique qui s'élargit, la surface d'élargissement (47) cylindrique et circulaire et une seconde surface de passage (46b) conique qui se rétrécit, dans laquelle la surface d'élargissement (47) est agencée entre les deux surfaces de passage (46a ; 46b).

5. Pièce de raccord (1) selon l'une quelconque des revendications précédentes, **caractérisée en ce que**
l'élargissement de section transversale (49) se raccorde dans le sens axial directement à la surface de siège de soupape (45).

6. Pièce de raccord (1) selon l'une quelconque des revendications précédentes, **caractérisée en ce que**
le boîtier de raccord (3) présente une surface cylindrique et circulaire, en particulier une surface de guidage de soupape (48) qui se raccorde dans le sens axial directement à l'élargissement de section transversale (49) et sur laquelle en particulier la soupape de fermeture (5) est montée sur un palier lisse.

7. Pièce de raccord (1) selon l'une quelconque des revendications précédentes, **caractérisée en ce que**
la soupape de fermeture (50) présente une douille de compartimentage et de guidage (77) pour le compartimentage de l'anneau étanche de soupape (76), dans laquelle la douille de compartimentage et de guidage (77) présente plusieurs éléments de guidage (102), en particulier trois, contigus dans le sens périphérique les uns aux autres, en saillie radialement respectivement, à l'aide desquels la douille de compartimentage et de guidage (77) est montée sur un palier lisse de manière à pouvoir se déplacer alternativement dans le boîtier de raccord (3) dans le sens axial, dans laquelle
il s'agit pour les éléments de guidage (77), de préférence de nervures de guidage (102) en saillie dans le sens radial, lesquelles présentent respectivement une étendue longitudinale parallèlement à l'axe longitudinal de soupape (73) et présentent respectivement une surface extérieure de nervure (102a) cylindrique, courbée de manière concave, dans laquelle une rainure d'écoulement (117) pouvant être traversée dans le sens axial est formée entre deux éléments de guidage (102) contigus l'un à l'autre dans le sens périphérique, en particulier les nervures de guidage (102).

8. Pièce de raccord (1) selon la revendication 7,
**caractérisée en ce que**
la soupape de fermeture (50) présente un corps de base de soupape (78) qui présente une partie de tête (79) ainsi que la tige de soupape (72) qui se raccorde à la partie de tête (79), dans laquelle l'anneau étanche de soupape (76) est agencé dans le sens axial entre la partie de tête (79) et la douille de compartimentage et de guidage (77) et maintenu de manière immobile dans le sens axial et radial, dans laquelle de préférence,
la douille de compartimentage et de guidage (77) est logée de manière immobile et non rotative, en particulier à l'aide d'un ajustement serré, sur le corps de base de soupape (78).

9. Pièce de raccord (1) selon l'une quelconque des revendications précédentes, **caractérisée en ce que**
la soupape de fermeture (50) présente une position fermée, fermant le canal d'écoulement (5) et une position ouverte au maximum, ne fermant pas le canal d'écoulement (5),
dans laquelle la soupape de fermeture (50) est montée sur un palier lisse de manière à pouvoir se déplacer de la position fermée à la position ouverte au maximum dans un sens d'ouverture de soupape axial (120) dans le boîtier de raccord (3), en particulier par rapport à la douille de palier (103), et
dans laquelle la soupape de fermeture (50) est montée sur un palier lisse de manière à pouvoir se déplacer de la position ouverte à la position fermée au maximum dans un sens de fermeture de soupape (119) opposé au sens d'ouverture de soupape (120) axial dans le boîtier de couplage (3), en particulier par rapport à la douille de palier (103),
dans laquelle de préférence, la soupape de fermeture (50) est verrouillable à l'aide du dispositif de verrouillage dans sa position ouverte au maximum de telle manière que la soupape de fermeture (50) soit logée de manière immobile dans le sens d'ouverture de soupape (120) dans le boîtier de raccord (3).

10. Pièce de raccord (1) selon l'une quelconque des revendications précédentes, **caractérisée en ce que**
les deux bras de ressort (114) entourent la tige de soupape (72) de part et d'autre de l'axe longitudinal de soupape (73) et dans la position ouverte au maximum de la soupape de fermeture (5) sont encliquetés dans la rainure de guidage de douille coulissante (91) de sorte que la soupape de fermeture (50) soit immobile dans le sens d'ouverture de soupape (120), et dans la position fermée de la soupape de fermeture (50) entourent la douille coulissante (92) de sorte que la soupape de fermeture (50) soit mobile dans le sens axial dans le boîtier de raccord (3), et en particulier par rapport à la douille de palier (103), en particulier dans le sens d'ouverture de soupape.

11. Pièce de raccord (1) selon l'une quelconque des revendications précédentes, **caractérisée en ce que**
le dispositif de soupape (51) présente un ressort de fermeture (70), avec lequel la soupape de fermeture (50) se trouve en liaison entraînable dans le sens de fermeture de soupape (119), dans laquelle le ressort de fermeture (70) s'appuie de préférence sur une extrémité contre la tête de soupape (71) et sur l'autre extrémité contre la douille de palier (103).

12. Pièce de raccord (1) selon l'une quelconque des revendications précédentes, **caractérisée en ce que**
la douille de palier (103) présente des moyens d'écartement pour l'écartement des bras de ressort (114) lors du déplacement de la soupape de fermeture (50) de sa position ouverte au maximum à sa position fermée, à l'aide desquels les bras de ressort (114) peuvent être écartés à l'aide des moyens d'écartement de telle manière qu'ils puissent être pressés hors de la rainure de guidage de douille coulissante (91) et enfilés sur la douille coulissante (92).

13. Raccord rapide, en particulier raccord à enfichage, pour des conduites hydrauliques à haute pression, présentant deux parties de raccord (1) verrouillables de manière détachable l'une à l'autre, en particulier un manchon de raccord (2) et une fiche de raccord, dans lequel les parties de raccord (1) présentent respectivement un boîtier de raccord (3) avec un canal d'écoulement (5) et un dispositif de soupape (51) agencé dans le canal d'écoulement (5) avec une soupape de fermeture (50) de type poussoir pour la fermeture du canal d'écoulement (5) à l'état non couplé du raccord rapide,
**caractérisée en ce que**
au moins une des deux parties de raccord (1) est réalisée selon l'une quelconque des revendications précédentes.
